# EUROPÄISCHE PATENTSCHRIFT

(11) **EP 2 456 729 B1**
(45) Veröffentlichungstag und Bekanntmachung des Hinweises auf die Patenterteilung: **12.02.2020**
(21) Anmeldenummer: 10734044.0
(22) Anmeldetag: 13.07.2010
(51) Int. Cl.: C03C 10/06, C03C 10/14

(54) **HOCHLEISTUNGSGLASKERAMIK UND VERFAHREN ZUR HERSTELLUNG EINER HOCHLEISTUNGSKERAMIK**
HIGH-PERFORMANCE GLASS CERAMICS AND METHOD FOR PRODUCING HIGH-PERFORMANCE GLASS CERAMICS
VITROCÉRAMIQUE HAUTE PERFORMANCE ET PROCÉDÉ DE FABRICATION D'UNE VITROCÉRAMIQUE HAUTE PERFORMANCE

(30) Priorität: 20.07.2009 DE 102009034152; 28.01.2010 DE 102010006232; 23.03.2010 US 316557 P
(43) Veröffentlichungstag der Anmeldung: 30.05.2012
(73) Patentinhaber: Schott AG, 55122 Mainz (DE)
(72) Erfinder: GABEL, Falk, 65388 Schlangebad (DE); RUDIGIER-VOIGT, Eveline, 55128 Mainz (DE); HENN, Christian, 55546 Frei-Laubersheim (DE); LEROUX, Roland, 55271 Stadecken-Elsheim (DE); STRENGE, Lorenz, 55218 Ingelheim (DE); DUDEK, Roland, 55545 Bad Kreuznach (DE)
(74) Vertreter: Herden, Andreas F.
(86) Internationale Anmeldenummer: PCT/EP2010/004250
(87) Internationale Veröffentlichungsnummer: WO 2011/009544

(56) Entgegenhaltungen:
- EP-A1- 1 170 264
- DE-A1-102005 019 247
- US-A- 3 809 543

## Beschreibung

Die Erfindung bezieht sich auf Glaskeramiken, deren Herstellung und Verwendung, und insbesondere auf Hochleistungsglaskeramiken mit wesentlich verbesserten physikalischen und chemischen Eigenschaften.

Aus dem Stand der Technik sind verschiedene Verfahren zur Herstellung von Glaskeramiken bekannt, die besonders die mechanischen Produkteigenschaften oder Produktionseigenschaften von glaskeramischen Gegenständen optimieren. Die wesentlichen Ausgangspunkte für diese Optimierung liegen in der Veränderung der Zusammensetzung der Ausgangsgläser oder in der Variation der Aufheizrate, die schneller oder langsamer gefahren werden kann.

Werden die Zusammensetzungen der Grüngläser verändert, liegt der Schwerpunkt der Optimierung oft auf der Verarbeitbarkeit der Glaskeramik, wobei beispielsweise niedrigere Verarbeitungstemperaturen angestrebt werden. Die Zusammensetzung hat aber auch Einfluss auf die Eigenschaften der Glaskeramik, da sie auch die Umwandlungsenthalpie und damit die Umwandlungsgeschwindigkeit des Systems beeinflusst.

Eine Herausforderung bei der Herstellung von Glaskeramik ist die Produktion von großformatigen oder sehr dünnwandigen Glaskeramik-Gegenständen. Bei der Umwandlung in eine Glaskeramik entsteht eine neue Kristall-Phase.

Diese Umwandlung ist auch immer mit einer Volumenänderung des keramisierenden Gegenstands verbunden. Da die Umwandlung und damit die Volumenveränderung in unterschiedlichen Bereichen des Gegenstands zu unterschiedlichen Zeiten und unterschiedlich schnell geschieht, werden Spannungen zwischen verschiedenen Bereichen des Gegenstands induziert. Diese Spannungen können insbesondere bei großformatigen Gegenständen, bei denen ein großes Glasvolumen umgewandelt werden muss oder bei sehr dünnwandigen Gegenständen, deren mechanische Beständigkeit schon durch ihre Dünnwandigkeit prekär ist, Ausmaße annehmen, die kaum beherrschbar sind. Ihre Produktion ist daher sehr schwierig und meist unwirtschaftlich.

Bei den oben genannten Produkten ist oft ihre vergleichsweise geringe Stoßfestigkeit nachteilig. Insbesondere bei opaken Glaskeramiken reicht diese häufig nicht aus, um produktspezifische Vorgaben erfüllen zu können. Soll beispielsweise eine Glaskeramik mit einem hohen Weißwert (L* > 90 im Lab-System) hergestellt werden, sind dafür Keramisierungstemperaturen von mehr als 1000°C, typischerweise sogar von mehr als 1080°C notwendig. Viele weiße opake Glaskeramiken, die bei Temperaturen von mehr als 1080°C umgewandelt wurden, weisen jedoch schon unmittelbar nach der Umwandlung ein stark ausgeprägtes Rissnetzwerk auf und haben daher nur eine sehr geringe oder nahezu gar keine Stoßfestigkeit.

Die EP 1170264 B1 lehrt die Herstellung von transluzenten Glaskeramiken mit einer vergleichsweise hohen Stoßfestigkeit, die auf eine in der Oberfläche erzeugte Druckspannung zurückgeführt wird. Diese Druckspannung wird durch eine Hochquarz-Mischkristall-Phase an der Oberfläche und eine Keatit-Mischkristall-Phase im Inneren der Glaskeramik erzeugt. Da die Hochquarz-Mischkristall-Phase eine geringere thermische Ausdehnung aufweist als die Keatit-Mischkristall-Phase, wird bei der Abkühlung im Anschluss an die Phasenumwandlung in den Oberflächenbereichen eine Druckspannung induziert.

Die Hochquarz-Mischkristall-Phase kann jedoch einerseits hinsichtlich ihrer Säurebeständigkeit problematisch sein und ist andererseits nur durch eine sehr exakte Prozessführung zu erzielen. Es muss dabei beispielsweise sichergestellt sein, dass sich der enthaltene Hochquarz im oberflächennahen Bereich bei der Abkühlung nicht in eine tief-Quarz-Struktur umlagert. Auch ein zu hoher SiO₂-Gehalt kann zu einer Umwandlung in die tief-Quarz-Struktur führen.

US 3,809,543 A beschreibt ein Verfahren zur Herstellung eines feinkörnigen glaskeramischen Materials aus einem thermisch kristallisierbaren gläsernen Material, bei welchem ein Glasband, welches aus dem thermisch kristallisierbaren gläsernen Material besteht, auf einem metallischen Floatbad in dessen Temperatur zeitabhängig beeinflusst wird.

Die DE 10 2005 019 247 B4 beschreibt ein Keramisierungsverfahren, das die Herstellung von Glaskeramiken mit hoher Temperaturunterschiedsfestigkeit (TUF) ermöglicht. Diese hohe TUF wird durch ein spezielles Keramisierungsverfahren erreicht, das durch hohe Heizraten gekennzeichnet ist. Angaben zur Stoßfestigkeit der hergestellten Glaskeramik werden jedoch nicht gemacht. Auch die Säurebeständigkeit wird nicht offenbart.

Darüber hinaus hat es sich als äußert schwierig erwiesen, Glaskeramiken, wie sie in der DE 10 2005 019 247 B4 beschrieben sind, formtreu umzuwandeln. Diese Schrift lehrt die Umwandlung einer Hochquarz-Mischkristall-Phase in eine Keatit-Mischkristall-Phase bei vergleichsweise hohen Temperaturen in Verbindung mit hohen Heizraten. Ein solches Verfahren kann beispielsweise bei der Keramisierung von flachen, plattenförmigen Gegenständen schnell zu Deformationen und Planitätsabweichungen führen. Um diese Verformung oder Verwerfung möglichst gering zu halten, werden im Allgemeinen bestimmte Haltezeiten bei einer Maximaltemperatur benötigt, die Planitätsabweichungen des Substrats reduzieren.

Sind jedoch geringe Verwerfungen beziehungsweise ist eine hohe Ebenheit der Platten gefordert, besteht die gängige Praxis meist darin, dies durch eine mechanische Nachbearbeitung oder sogar durch ein Herausschneiden von ebenen Bereichen aus einer größeren Platte zu kompensieren bzw. zu korrigieren.

Das Ausschneiden von ebenen Bereichen aus einer größeren Platte ist nicht nur aus Kostengründen nachteilig. Innerhalb eines Glaskeramik-Gegenstands bildet sich eine bestimmte Gefügeabfolge aus, die zu den guten mechanischen Eigenschaften der Glaskeramik beiträgt. Wird diese Abfolge durch Nachbearbeiten wie beispielsweise durch Zuschneiden oder Abschleifen unterbrochen oder verändert, können in diesen Bereichen Schwachstellen entstehen. So kann beispielsweise die mechanische und chemische Beständigkeit bearbeiteter Glaskeramiken deutlich schlechter sein als die unbearbeiteter. Das innere glaskeramische Gefüge liegt dann offen und zum Teil mit Mikrorissen versehen an der Oberfläche zutage und ist nicht mehr durch das beständigere Oberflächengefüge vor Risswachstum oder vor dem Angriff aggressiver Chemikalien geschützt.

Der Erfindung liegt daher die Aufgabe zugrunde, eine Glaskeramik bereitzustellen, die verbesserte mechanische und chemische Eigenschaften, insbesondere eine höhere Stoßfestigkeit und eine verbesserte Säurebeständigkeit, aufweist. Darüber hinaus soll ein Verfahren entwickelt werden, mit dem das erfindungsgemäße Produkt herstellbar ist, und eine Verwendung der Glaskeramik soll bereitgestellt werden.

Diese Aufgabe wird durch den Gegenstand der Ansprüche 1, 4 und 19 gelöst. Vorteilhafte Ausgestaltungen und Weiterbildungen sind in den Unteransprüchen ausgeführt.

Ein erfindungsgemäßer glaskeramischer Gegenstand, der einstückig und nicht nachbearbeitet oder weiterverarbeitet ist, ist mit einem Verfahren herstellbar, bei dem zumindest ein Vorläufergegenstand zumindest teilweise zu einem Glaskeramik umfassenden Gegenstand umgewandelt wird. Der glaskeramische Gegenstand kann transluzent oder auch bevorzugt opak sein.

Die Charakterisierung, dass der glaskeramische Gegenstand einstückig und nicht nachbearbeitet oder weiterverarbeitet ist, dient im Wesentlichen zur Abgrenzung der Eigenschaften eines erfindungsgemäßen glaskeramischen Gegenstands vom Stand der Technik. Es soll damit insbesondere klargestellt werden, dass die beschriebenen Eigenschaften nicht durch nachfolgende Bearbeitungsschritte irgendeiner Art, beispielsweise durch Abschleifen oder Aufbringen einer Beschichtung oder ähnlichem, erzeugt werden, sondern dem Gegenstand im Zustand, der durch die Keramisierung hergestellt wird, immanent sind.

Dabei wird entweder ein Vorläufergegenstand aus Glas zu dem glaskeramischen Gegenstand, der zumindest eine erste Kristall-Phase umfasst, umgewandelt oder keramisiert. Oder es wird eine erste Kristall-Phase eines Vorläufergegenstandes, der zumindest diese erste Kristall-Phase umfasst, in eine zweite Kristall-Phase des glaskeramischen Gegenstands umgewandelt.

Anders ausgedrückt soll unter dem Vorläufergegenstand im Rahmen dieser Offenbarung ein Grünglas, bei dem der Kristallphasenanteil unter 10 Vol.% liegt, oder ein glaskeramischer Gegenstand verstanden werden, der durch das erfindungsgemäße Verfahren in einen Gegenstand mit einem (andersartigen) glaskeramischen Gefüge überführt oder weiter keramisiert wird, wobei zumindest eine Phasenumwandlung stattfindet.

Diese Phasenumwandlung kann aus der Keimbildung in einem Grünglas und der nachfolgenden Kristallisation und dem Wachstum von Kristalliten bestehen. Sie kann jedoch auch die Umwandlung einer bereits bestehenden ersten Kristall-Phase in einem vorkeramisierten Vorläufergegenstand in eine andersartige oder auch eine zweite Kristall-Phase bedeuten.

Unter einer Umwandlung in eine andersartige oder auch eine zweite Kristall-Phase wird hier insbesondere eine Struktur- und Zusammensetzungsveränderung verstanden wie sie beispielsweise bei einem Übergang von einer Hochquarz-Mischkristall- in eine Keatit-Mischkristall-Phase erfolgt.

Wird der glaskeramische Gegenstand aus einem bereits keramisierten Vorläufergegenstand hergestellt, schließt das nicht aus, dass auch für die Herstellung des Vorläufergegenstands das erfindungsgemäße Verfahren angewendet wurde. Es können also sowohl der Vorläufergegenstand als auch der glaskeramische Gegenstand mittels des erfindungsgemäßen Verfahrens hergestellt werden.

Wird ein glaskeramischer Vorläufergegenstand verwendet, kann dieser unabhängig, insbesondere zeitlich unabhängig, von der erfindungsgemäßen Umwandlung keramisiert worden sein. Der Vorläufergegenstand kann also zwischenzeitlich auf Raumtemperatur abgekühlt worden sein.

Die Erfindung erfasst jedoch auch den Fall, dass ein glaskeramischer Vorläufergegenstand direkt vor der erfindungsgemäßen Umwandlung hergestellt wurde und zwischenzeitlich nicht auf Raumtemperatur abgekühlt wurde. Vorläufergegenstand und Glaskeramik umfassender Gegenstand können auch in einem fortlaufenden Prozess erstellt werden.

Ein Vorläufergegenstand kann färbende Metalloxide enthalten, so dass der Glaskeramik umfassende Gegenstand, der aus diesem Vorläufergegenstand hergestellt wird, volumengefärbt ist. Grundsätzlich ist die Zugabe von allen aus dem Stand der Technik bekannten färbenden Oxiden oder Dotierungen für Glaskeramiken möglich.

Im Rahmen dieser Offenbarung wird unter einem "transluzenten" glaskeramischen Gegenstand ein Gegenstand mit einem Transmissionsgrad von 0,10 bis 0,95 im Bereich von 400 bis 1600 nm verstanden. Ein "opaker" glaskeramischer Gegenstand weist dagegen praktisch keine Transmission auf; er hat einen Transmissionsgrad von 0 bis 0,10. Da ein glaskeramischer Gegenstand, der in unterschiedlichen Wandstärken auf gleiche Weise, d.h. mittels der gleichen Verfahrensparameter, hergestellt wurde, durchaus bei geringer Dicke transluzent und bei größerer Dicke opak erscheinen kann, ist der Transmissionsgrad und damit die Bezeichnungen "transluzent" und "opak" auf eine Wandstärke von 4 mm bezogen zu verstehen.

Der Vorläufergegenstand wird während des Verfahrens auf eine Maximaltemperatur aufgeheizt. Die Heizrate zur Erreichung der Maximaltemperatur ist größer als 10 K/min, und liegt bevorzugt zwischen 14 und 36 K/min. Grundsätzlich ist die Heizrate nicht verfahrensbedingt nach oben hin begrenzt, sondern abhängig von den technischen Möglichkeiten, z.B. der Leistungsfähigkeit des verwendeten Ofens.

Nach Erreichen der Maximaltemperatur schließt sich eine im Vergleich zum Stand der Technik sehr geringe Haltezeit der Maximaltemperatur von nicht mehr als zwei Minuten an. Bevorzugt wird überhaupt keine Haltezeit eingehalten, oder anders ausgedrückt: auf eine Haltezeit wird im Wesentlichen oder ganz verzichtet. Dies ist vorteilhaft, weil Prozesszeit eingespart wird. Haltezeiten im Bereich der Keimbildung sind jedoch möglich, ohne den erfindungsgemäßen Bereich zu verlassen.

Das erfindungsgemäße Verfahren ist dahingehend eingeschränkt, dass der Vorläufergegenstand eine Lithium-AluminiumSilikat-Zusammensetzung aufweist.

Wie bereits weiter oben beschrieben, ist insbesondere bei großformatigen oder dünnwandigen Gegenständen der Aufbau von internen Spannungen in einem Glaskeramik-Gegenstand problematisch, weil sie die Stoßfestigkeit und damit die Belastbarkeit und Haltbarkeit des Gegenstands beeinträchtigen. Als großformatige Gegenstände werden im Rahmen dieser Beschreibung Formate mit einem Volumen von mehr als 1 m³, als dünnwandige Gegenstände, solche, die eine Wandstärke von weniger als 3 mm aufweisen, bezeichnet. Nach dem gängigen Verständnis beruht das Entstehen dieser Spannungen im Wesentlichen auf zwei Mechanismen.

Der erste Mechanismus beinhaltet, dass die Phasenumwandlung an unterschiedlichen Stellen des Vorläufergegenstands zu unterschiedlichen Zeiten beginnt und unterschiedlich schnell verläuft. Die Phasenumwandlung generiert Kristallisationswärme. Kann diese Wärme nicht schnell genug abgeführt werden, entstehen Temperaturüberhöhungen, die die Keramisierungsgeschwindigkeit lokal erhöhen. Da die fortschreitende Umwandlung auch zu einer drastischen Viskositätserhöhung führt, sind die bereits umgewandelten oder kristallisierten Bereiche sehr viel weniger in der Lage auftretende Spannungen auszugleichen als die noch nicht umgewandelten Bereiche. Insbesondere Spannungen, die gegen Ende des exothermen Umwandlungsbereichs auftreten, wenn durch die schon weit fortgeschrittene Umwandlung die Viskosität bereits stark erhöht ist, können nicht mehr ausreichend relaxiert werden. Der hergestellte glaskeramische Gegenstand weist nur eine geringe Festigkeit, insbesondere Stoßfestigkeit auf.

Eine bereits in der Einleitung genauer beschriebene Möglichkeit dieser Problematik zu begegnen ist die Verringerung der Aufheizrate oder Heizrate, die dazu führt, dass der Zeitraum der maximalen Kristallisation deutlich verlängert wird. Diese Verlangsamung erlaubt eine teilweise Relaxation der entstehenden Spannungen schon beim Keramisieren. Die generelle Verlangsamung der Heizrate bedingt jedoch auch deutlich verlängerte Prozesszeiten und damit einen geringeren Durchsatz und erhöhte Kosten. Darüber hinaus keramisiert der glaskeramische Gegenstand nach Erreichen der Maximaltemperatur weiter.

Die zweite Möglichkeit bzw. der zweite Mechanismus, der in einem glaskeramischen Gefüge festigkeitskritische Spannungen erzeugen kann, beruht auf dem Gradienten im thermischen Ausdehnungskoeffizienten von verschiedenen Kristallphasen im glaskeramischen Gefüge. Es ist bekannt, dass es bei einer moderaten Umwandlungsgeschwindigkeit zu Stofftransporten zwischen den einzelnen Phasen im Gefügekommen kann. Dadurch können sich einzelne Phasen mit verschiedenen Komponenten anreichern und so ihren Strukturtyp ändern. Diese Änderung des Strukturtyps geht einher mit einer Änderung des spezifischen Ausdehnungskoeffizienten. Beispielsweise kann in einem im Wesentlichen aus drei Haupt-Phasen, nämlich einem Keatit-Mischkristall als Hauptkristallphase im Inneren der Glaskeramik, einem Mischkristall des hoch-Quarz-Strukturtyps, der oberflächennah angeordnet ist und einer weitestgehend amorphen Randschicht aufgebauten Gefüge der Mischkristall des hoch-Quarz-Strukturtyps durch eine Silizium-Anreicherung in den tief-Quarz-Strukturtyp übergehen. Dies führt zu einer signifikanten Änderung des mittleren thermischen Ausdehnungskoeffizienten von etwa 0,1 x 10⁻⁶ K⁻¹ des hoch-Quarz-Strukturtyps auf mehr als 5,0 x 10⁻⁶ K⁻¹ des tief-Quarz-Strukturtyps. Dadurch entstehen kritische Zugspannungen im Inneren der Glaskeramik, die zu einer Rissbildung, in jedem Fall aber zu einer Festigkeitsminderung führen können.

Vermeidbar sind diese Umwandlungen durch die Anwendung des hier beschriebenen Herstellungs-Verfahrens, welches aufgrund der hohen Aufheizraten in Kombination mit nahezu keiner Verweil- oder Haltezeit im Bereich der Maximaltemperatur des Prozesses und einer rapiden Abkühlung sämtliche Phasenzustände einfriert und jegliche Form von Weiter-Kristallisation, Stoffanreicherung und Strukturtyp-Änderung verhindert oder zumindest in Hinblick auf die Eigenschaften auf ein unkritisches Maß reduziert.

Die Erfinder haben überraschender Weise festgestellt, dass sich mit vergleichsweise hohen Heizraten und insbesondere sehr geringen Haltezeiten Produkte mit einem neuartigen Gefüge herstellen lassen, die sich besonders durch ihre hohe Stoßfestigkeit und eine sehr gute Säurebeständigkeit auszeichnen. Eine ausführliche Beschreibung der Vorteile des erfindungsgemäßen Produkts folgt später.

Allerdings ist genau dieser Verfahrensschritt der Verkürzung beziehungsweise des Weglassens der Haltezeit im Bereich der Maximaltemperatur hinsichtlich der Ausgleichbarkeit von während der Phasenumwandlung auftretenden Produktverwerfungen auch sehr problematisch. Die Umwandlung einer Hochquarz-Mischkristall-Phase in eine Keatit-Mischkristall-Phase ist beispielsweise mit einer deutlichen Volumenzunahme von 0,1 bis 2,0% verbunden.

Die Homogenität der Kristallisierung hängt nicht nur von der Größe und der Wandstärke des zu keramisierenden Gegenstands ab, sondern in besonderem Maße auch von der Homogenität des Wärmezutritts zum Gegenstand. Der keramisierende Vorläufer-Gegenstand sollte also möglichst gleichmäßig durchwärmt werden, um eine horizontal und vorzugsweise auch lateral möglichst gleichmäßig verlaufende Keramisierung zu gewährleisten. Ist die Durchwärmung dagegen ungleichmäßig, besteht die Gefahr einer Deformation oder Verwerfung des glaskeramischen Gegenstands.

Eine Möglichkeit, diese Hochbiegungen oder Verwerfungen zumindest teilweise zu vermeiden, besteht darin, Haltezeiten bei einer Maximaltemperatur einzuhalten. Während der Haltezeit bei Maximaltemperatur kommt es zumindest zu einer leichten Verringerung der Viskosität im keramisierenden Material sowie zu einer Zunahme der jeweiligen Phasengehalte der vorhandenen Phasen und zu einem Abbau von Spannungen. Verwerfungen werden zumindest teilweise wieder nivelliert. Gleichzeitig reift aber der keramisierende Gegenstand, bestehende Gradienten werden abgebaut und aufgrund der Zunahme der Phasengehalte werden Strukturumwandlungen bzw. Strukturtypen-Änderungen begünstigt. Daher ist diese Vorgehensweise nicht geeignet, um glaskeramische Gegenstände mit den erfindungsgemäßen Eigenschaften herzustellen.

Wird die Haltezeit, wie erfindungsgemäß vorgesehen, stark verkürzt oder ganz weggelassen, entfällt auch diese Möglichkeit zur Nivellierung der Verwerfungen. Verschärft wird die beschriebene Problematik, wenn hohe Heizraten zur Erreichung der Maximaltemperatur gefahren werden. Je höher die Heizraten in dem Bereich, in dem die Phasenumwandlung oder Volumenkristallisation stattfindet, desto größer ist die Gefahr potentiell entstehender Temperaturunterschiede im keramisierenden Vorläufergegenstand und desto größer sind auch die potentiellen Verwerfungen des Produkts durch die Phasenumwandlung.

Zur Vermeidung dieser Problematik wird eine gleichmäßige Durchwärmung des keramisierenden Gegenstands auch bei hohen Heizraten angestrebt. Dies kann auf unterschiedliche Weisen erreicht werden. Beispielsweise können die glaskeramischen Gegenstände in Einzelfertigung in Batch-Öfen hergestellt werden, die nur ein geringes Ofenvolumen aufweisen. Durch das geringe Ofenvolumen ist zum einen eine schnelle Temperaturregelung möglich. Andererseits bestehen keine Kamineffekte, die beispielsweise bei einer Fertigung im Rollenofen zu Temperaturunschärfen führen können. Damit soll allerdings eine Fertigung im Rollenofen nicht als nachteilig dargestellt werden. Hier ist nur der Aufwand zu Herstellung einer gleichmäßigen Durchwärmung größer. Es bietet sich in diesem Zusammenhang beispielsweise an, eine Beheizung des keramisierenden Gegenstands aus unterschiedlichen Richtungen vorzunehmen, um Temperaturunterschiede, die beispielsweise aufgrund der Geometrie des Ofens auftreten können, besser ausgleichen zu können. Beispielsweise kann auch eine Beheizung von Ober- und Unterseite des keramisierenden Vorläufer-Gegenstands vorgenommen werden.

Erfindungsgemäß weicht die Temperaturverteilung während der Aufheizung auf eine Maximaltemperatur zwischen Oberseite und Unterseite des Vorläufergegenstands zumindest während eines exothermen Bereichs der Phasenumwandlung maximal +/- 1 K von einer mittleren Temperatur im sich umwandelnden Vorläufergegenstand ab. Deformationen und Planitätsabweichungen können so stark verringert oder sogar gänzlich vermieden werden.

Eine vorteilhafte Weiterbildung der Erfindung sieht weiterhin vor, dass Temperaturveränderungen des Vorläufergegenstands vorzugsweise kontinuierlich und insbesondere im kritischen Zeitraum der Volumenkristallisation, d.h. im Bereich der exothermen Phasenumwandlung, gemessen werden. Kritische Abweichungen von einer mittleren Temperatur im keramisierenden Vorläufergegenstand können so erkannt und durch Korrektur oder Anpassung der Ofenbeheizung entsprechend vorgegebenen Sollwerten geregelt werden.

Darüber hinaus kann neben der vertikalen Temperaturkontrolle im keramisierenden Vorläufergegenstand vorteilhaft auch eine horizontale Temperaturkontrolle vorgenommen werden. Dabei wird die Beheizung des Ofens oder der Kammer, in der die Phasenumwandlung durchgeführt wird, so geregelt, dass die Temperaturverteilung über die Breite und/oder die Länge des sich umwandelnden Vorläufergegenstands zumindest während der Phasenumwandlung maximal +/- 5 K von einer mittleren Temperatur im sich umwandelnden Vorläufergegenstand abweicht.

Die vertikalen oder horizontalen Temperaturveränderungen können beispielsweise mittels Temperaturfühlern aufgenommen werden, die in nächster Nähe zum keramisierenden Vorläufergegenstand angeordnet sind. In einer besonders bevorzugten Weiterbildung weisen diese Temperaturfühler eine Reaktionszeit von weniger als zehn Sekunden, bevorzugt von maximal einer Sekunde auf.

Auch die Beheizung sollte sich vorzugsweise innerhalb von 10 Sekunden, besonders bevorzugt innerhalb von einer Sekunde regeln lassen. Da die Phasenumwandlung exotherm und bei hohen Heizraten auch innerhalb weniger Minuten ablaufen kann, sind schnelle Reaktionszeiten wichtig für eine wirkungsvolle Temperaturregelung.

Ein besonderer Vorteil des erfindungsgemäßen Verfahrens ist die Formtreue, die zwischen dem Vorläufergegenstand und dem glaskeramischen Gegenstand besteht. Abgesehen von der Volumenänderung durch die Phasenumwandlung, ändert der Vorläufergegenstand während der Umwandlung kaum seine Form. Dies ist insbesondere auch dann vorteilhaft, wenn geformte Körper, beispielsweise Schalen für einen Wok, keramisiert werden. Besonders vorteilhaft kann hier ein bereits keramisierter Vorläufergegenstand verwendet werden, der dann einer erfindungsgemäßen Phasenumwandlung unterzogen wird. Da der Gegenstand bereits eine zumindest teilkristalline Struktur besitzt, sind die minimalen Viskositäten um Größenordnungen höher als bei der Umwandlung eines Grünglases in eine transparente Glaskeramik mit Hochquarz-Mischkristallphase, so dass es nicht zu einem Zusammensacken der hochstehenden Wände oder zu einer Wölbung des Bodens beim Keramisieren kommt. Die Form des Woks entspricht im Wesentlichen, d.h. ohne Berücksichtigung der Volumenänderung durch die Phasenumwandlung, der Form, die der Wok vor der Keramisierung hatte.

Ein glaskeramischer Gegenstand wird mittels eines Verfahrens, wie oben beschrieben, hergestellt.

Ein glaskeramischer Gegenstand ist dadurch charakterisiert, dass er im nicht nachbearbeiteten oder weiterverarbeiteten Zustand zumindest drei verschiedenartige Gefüge umfasst. Diese Gefüge unterscheiden sich in der Zusammensetzung der Kristallite und/oder der Zusammensetzung der Restglasphasen.

Die zumindest drei unterschiedlichen Gefüge lassen sich anhand unterschiedlicher relativer Ionen-Gehaltsverläufe im Querprofil voneinander unterscheiden. Werden die Ionen-Gehaltsverläufe senkrecht zu den Übergangsbereichen zwischen den einzelnen Gefügen gemessen, so ergeben sich charakteristische Unterschiede für die einzelnen Gefüge.

Die relativen Ionen-Gehaltsverläufe werden mittels Sekundärionen-Massenspektrometrie ermittelten Intensitäten bestimmt. Die genannten Intensitäten geben keine absoluten Ionen-Gehalte wieder; sie können jedoch als relative Gehaltsveränderung interpretiert werden. Anstelle von "relativen Ionen-Gehaltsverläufen" wird im Folgenden vereinfacht auch nur von "Ionen-Gehaltsverläufen" gesprochen.

Gemäß der Erfindung weisen die zumindest drei verschiedenartigen Gefüge jeweils unterschiedliche Intensitätsplateaus für einzelne Ionen auf. "Einzelne Ionen" sind Ionen, die Bestandteile der Hauptkristall-Phasen sind. Gemäß der Erfindung handelt es sich um eine LAS-Glaskeramik. Die Ionen, die Intensitätsplateaus zeigen, umfassen Na-, K-, Li- oder Mg-Kationen. Solche Intensitätsplateaus für einzelne Ionen in verschiedenen Gefüge-Bereichen sind aus dem Stand der Technik nicht bekannt.

Die Übergänge zwischen Bereichen mit unterschiedlichen Gefügen bilden typischer Weise die Morphologie der Grenzflächen, d.h. seine Konturen oder Kanten zur Umgebung nach, wobei die Bereiche unterschiedlicher Gefüge vom Rand zum Inneren des glaskeramischen Gegenstands aufeinander folgen. Die verschiedenen Gefüge sind also nach Art einer russischen Puppe ineinander geschachtelt.

Gemäß einer besonders bevorzugten Ausführungsform, lassen sich die Gefüge auch anhand des Verhältnisses von Kristalliten zu Restglasphase voneinander abgrenzen. Ein äußerer, die Grenzfläche zur Umgebung umfassender Bereich des glaskeramischen Gegenstands weist ein weitestgehend amorphes erstes Gefüge auf. Unter einer weitestgehend amorphen Randschicht oder einem weitestgehend amorphen ersten Gefüge soll ein oberflächennaher Gefügebereich verstanden werden, der eine Dicke von 30 bis 6000 nm aufweisen kann und weniger als 10 Vol.-% Kristallite enthält. Insbesondere weist dieser Gefüge-Bereich bevorzugt gar keine Kristallite der Hauptkristall-Phasen des Glaskeramik-Gegenstands auf. In jedem Fall gehören jedoch max. 10 Vol.-% der im amorphen Randbereich enthaltenen Kristallite den oder der Hauptkristall-Phase an.

Ein zweiter, an den ersten angrenzender Bereich, umfasst ein zweites Gefüge, das einen Kristallit-Gehalt zwischen 10 und 80 Vol.-% aufweist.

Ein dritter, an den zweiten angrenzender Bereich, umfasst ein drittes Gefüge, das einen Kristallit-Gehalt von über 80 Vol.-% aufweist. Dieses Gefüge bildet das Innere des glaskeramischen Gegenstands.

Eine besonders bevorzugte Ausführungsform des glaskeramischen Gegenstands hat eine Säurebeständigkeit gemäß DIN 12 116 von Klasse 1 oder 2. Ein solcher Glaskeramik-Gegenstand kann daher vorteilhaft in Produktionsprozessen, beispielsweise als Laborgerät oder zur Innenverkleidung von Öfen oder Ähnlichem verwendet werden, in denen aggressive Substanzen zum Einsatz kommen.

Insbesondere vorteilhaft ist die hohe Stoßfestigkeit des glaskeramischen Gegenstands. Im Kugelfalltest zeigt sich, dass ein glaskeramischer Gegenstand mit den Maßen 200 x 200 x 4 mm Bruchfallhöhen von mehr als 15 cm, vorzugsweise mehr als 20 cm und besonders bevorzugt mehr als 25 cm (5%-Fraktil der Weibull-Verteilung) aufweist. In diesem Test wird eine 535 g schwere Stahlkugel aus einer definierten Höhe im Freifall auf die Mitte einer Probe fallen gelassen. Die Fallhöhe wird stufenweise gesteigert bis der Bruch eintritt. Die Stoßfestigkeit ist eine statistische Größe und stellt den Mittelwert der an etwa 30 Proben ausgeführten Bruchfallhöhen dar. Der Test ist an den Kugelfalltest nach DIN 52306 angelehnt.

Die chemische Beständigkeit lässt sich auch anhand des S-Tests belegen, indem ein erfindungsgemäßer glaskeramischer Gegenstand für 30 Minuten einem Angriff von konzentrierter Schwefelsäure bei einer Temperatur von 370°C ausgesetzt wird. Bei einem anschließenden Kugelfalltest wie oben beschrieben weisen die Gegenstände immer noch Bruchfallhöhen von größer 15 cm, bevorzugt sogar von größer als 20 cm (5% Fraktil) auf.

Darüber hinaus weist ein erfindungsgemäßer opaker glaskeramischer Gegenstand vorteilhaft eine Temperaturunterschiedsfestigkeit von mehr als 700°C auf. Eine solche Temperaturunterschiedsfestigkeit ist für Glaskeramiken, die als Hauptkristall-Phase Hochquarz-Mischkristalle umfasst nichts Ungewöhnliches.

Glaskeramiken, deren Hauptkristall-Phase aus Keatit-Mischkristallen besteht und deren Weißwerte über L* = 95 liegen, sind dagegen nach derzeitigem Kenntnisstand nur durch eine Keramisierung bei Temperaturen zwischen 1070 und 1090°C, bevorzugt bei 1080°C herstellbar, wobei die Verweildauer bei maximaler Temperatur zwischen 10 und 40 Minuten beträgt. Die stoßfeste Herstellung insbesondere solcher Keatit-Mischkristall-Glaskeramiken mit einem hohen Weißwert und einer hohen Temperaturunterschiedsfestigkeit ist nicht trivial, da Glaskeramiken, die nach dem Stand der Technik hergestellt wurden, häufig schon innerhalb von 48 Stunden nach der Keramisierung ohne äußeren Anlass ein starkes Rissnetzwerk aufweisen. Dieses Rissnetzwerk wird auf das Vorhandensein von starken inneren Spannungen in Verbindung mit kleinsten Verletzungen der Glaskeramik-Oberfläche zurückgeführt.

Überraschender Weise erlaubt das erfindungsgemäße Verfahren, namentlich eine hohe Heizrate (größer als 10 K/min, bevorzugt 14 bis 36 K/min) in Verbindung mit einer sehr kurzen Haltezeit (0 - 2 min, bevorzugt gar keine Haltezeit) bei Maximaltemperaturen von 900°C bis 1300°C eine industriell verwertbare Herstellung von Glaskeramik-Gegenständen, die im Falle bestimmter Zusammensetzungen eine Hauptkristall-Phase aus Keatit-Mischkristallen und einen Weißwert von L* größer als 95, bevorzugt sogar größer als 97 aufweisen. Es wird vermutet, dass mittels der oben genannten Parameter die beschriebene neue Gefügestruktur erzielt wird.

Wahrscheinlich beruhen die mit dem erfindungsgemäßen Verfahren erzielten hohen Stoß- und Temperaturunterschiedsfestigkeiten u.a. darauf, dass so gut wie keine Mischkristalle mit einer tief-Quarz-Struktur mehr in oberflächennahen Bereichen vorliegen. Untersuchungen haben gezeigt, dass Glaskeramiken, die nach dem Stand der Technik hergestellt wurden, häufig unterhalb des auch im erfindungsgemäßen Produkt vorhandenen randständigen oder weitestgehend amorphen Bereichs einen zusätzlichen Bereich aufweisen, in dem Mischkristalle mit einer tief-Quarz-Struktur vorliegen. Dieser Bereich entfällt erfindungsgemäß.

Dieser Bereich mit Mischkristallen in tief-Quarz-Struktur weist einen thermischen Ausdehnungskoeffizienten von größer als 13 x 10⁻⁶ K⁻¹ auf und ist somit deutlich höher als der thermische Ausdehnungskoeffizient im Inneren des Glaskeramik-Gegenstands von etwa 1,1 x 10⁻⁶ K⁻¹ und auch höher als der thermische Ausdehnungskoeffizient des weitestgehend amorphen randständigen Bereichs von etwa 4 x 10⁻⁶ K⁻¹ ist. Bei der Abkühlung am Ende des Keramisierungsprozesses kommt es so zu einer deutlich höheren Volumenkontraktion im Bereich mit der tief-Quarz-Struktur als in den angrenzenden Bereichen. Es wird vermutet, dass diese Unterschiede im Ausdehnungsverhalten in den unterschiedlichen Bereichen Spannungen induzieren, die zu Oberflächenrissen führen können.

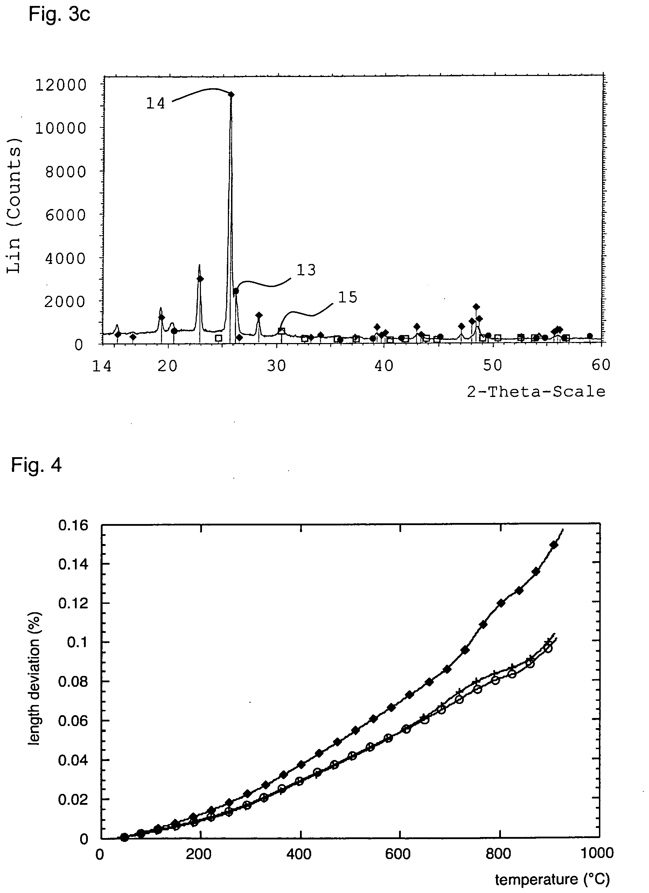

Ein mit dem beschriebenen Verfahren herstellbarer erfindungsgemäßer glaskeramischer Gegenstand kann beispielsweise folgende mechanischen oder chemischen Eigenschaften aufweisen:
- Maximaler Temperaturgradient: 400 - 800 K
- TUF: > 700°C
- Thermischer Ausdehnungskoeffizient: siehe Abb. 4
- Elastizitätsmodus E gem. ASTM C-1259: 84 - 95 x 10³ MPa
- Knoop Härte HK_{0,1/20} gem. ISO 9385: 570 - 680
- Biegefestigkeit σ_{bB} gem. DIN EN 1288, Teil 5, R 45: 100 - 160 MPa

Die hohen Stoß- und Temperaturunterschiedsfestigkeiten ermöglichen den Einsatz erfindungsgemäßer glaskeramischer Gegenstände in Bereichen, in denen auf kurzen Distanzen starke Temperaturunterschiede bestehen. Es kann sich dabei beispielsweise um Kochflächen, Ofenscheiben, aber auch Weißware oder glaskeramische Kochgefäße handeln. Die Verwendung als Kochgefäß ist beispielsweise erst durch die Stoßfestigkeit der erfindungsgemäßen Glaskeramik umfassenden Gegenstände sinnvoll. Besonders vorteilhaft ist in diesem Zusammenhang auch, dass im visuellen Wellenlängenbereich opake erfindungsgemäße Gegenstände im infraroten Wellenlängenbereich eine Transparenz von > 70% aufweisen können.

Eine hohe mechanische und u.v. auch thermische Stabilität führt auch dazu, dass die erfindungsgemäß hergestellten Artikel nahezu keine Partikel und Stoffe/Zusammensetzungsbestandteile abgegeben. Daher können sie in der pharmazeutischen Industrie als Behälter oder Anlagenbestandteile, in thermischen Anlagen z. B. als Ofenauskleidungen von Temperöfen und chemischen oder physikalischen Beschichtungsanlagen in der Solarindustrie sowie als Hochleistungskeramiken eingesetzt werden.

Letzteres wird vor allem dadurch begünstigt, dass die dafür geforderten Geometrien leicht herstellbar und mit glatten Oberflächen versehen sind.

Die erfindungsgemäße Glaskeramik wird verwendet, wie in Anspruch 19 definiert.

Gemäß einer besonders bevorzugten Ausführungsform der Erfindung kann ein glaskeramischer Gegenstand folgende Zusammensetzung aufweisen:

| | | |
|---|---|---|
| 60 - 73,0 | Gew.-% | SiO₂, |
| 15 - 25,0 | Gew.-% | Al₂O₃, |
| 2,2 - 5,0 | Gew.-% | Li₂O, |
| 0 - 5,0 | Gew.-% | CaO + SrO + BaO, |
| 0 - 5,0 | Gew.-% | TiO₂, |
| 0 - 5,0 | Gew.-% | ZrO₂, |
| 0 - 4,0 | Gew.-% | ZnO |
| 0 - 3,0 | Gew.-% | Sb₂O₃, |
| 0 - 3,0 | Gew.-% | MgO, |
| 0 - 3,0 | Gew.-% | SnO₂. |
| 0 - 9,0 | Gew.-% | P₂O₅, |
| 0 - 1,5 | Gew.-% | As₂O₃, |
| 0 - 1,2 | Gew.-% | Na₂O + K₂O, wobei die jeweiligen Anteile innerhalb der nachfolgend angegebenen Bereiche liegen, |
| 0 - 1,0 | Gew.-% | Na₂O, |
| 0 - 0,5 | Gew.-% | K₂O sowie |
| 0 - 1,0 | Gew.-% | färbende Oxide. |

Ein glaskeramischer Gegenstand, der einer der oben genannten Zusammensetzungen entspricht, kann ein erstes weitestgehend amorphes Gefüge aufweisen, das relativ zum zweiten und dritten Gefüge an Li- und Mg-Ionen verarmt sowie an Na- und K-Ionen angereichert ist. Ebenso wie in den beiden folgenden Gefügen zeigen die beschriebenen Ionen-Gehaltsverläufe in den verschiedenen Gefügen unterschiedliche Intensitätsplateaus. Die beschriebenen relativen An- oder Abreicherungen beziehen sich dabei auf die Niveaus der Intensitätsplateaus in den verschiedenen Gefügen.

Ein zweites Gefüge, das sich an das erste weitestgehend amorphe Gefüge anschließt, kann vorteilhaft relativ zum ersten Gefüge an Li- und Mg-Ionen angereichert sein. Die Kationen Na und K sind relativ zum ersten Gefüge abgereichert.

Im dritten Gefüge sind Li- und Mg-Ionen relativ zu den ersten beiden Gefügen angereichert. Na- und K-Ionen sind dagegen relativ zu den beiden anderen Gefügen abgereichert.

Bevorzugt weisen die beiden ersten Gefügebereiche eine Dicke oder Mächtigkeit senkrecht zu den Übergangsbereichen der Gefüge von maximal 10 µm und bevorzugt von maximal 5 µm auf, wobei sich die Gefüge anhand der Ionen-Gehaltsverläufe unterscheiden lassen.

Gemäß einer besonders bevorzugten Weiterbildung der Erfindung umfasst zumindest das dritte Gefüge des glaskeramischen Gegenstands eine Hauptkristall-Phase aus Keatit-Mischkristallen und eine zweite Kristall-Phase aus Hochquarz-Mischkristallen, wobei das Verhältnis zwischen der Hochquarz-Mischkristall-Phase und der Keatit-Mischkristall-Phase zum Rand des Glaskeramik umfassenden Gegenstands kontinuierlich oder in Stufen zunimmt. Da die Hochquarz-Mischkristall-Phase einen geringeren thermischen Ausdehnungskoeffizienten als die Keatit-Mischkristall-Phase aufweist, entstehen Spannungen, die von innen nach außen vergleichsweise kontinuierlich zunehmen. Diese vergleichsweise kontinuierliche Zunahme von innen nach außen ist insbesondere im Gegensatz zum Stand der Technik zu sehen, in dem Hochquarz-Mischkristall-reiche Bereiche oder Schichten oberflächennah vorliegen. Zwischen diesen Hochquarz-Mischkristall-reichen Schichten und dem Keatit-Mischkristall-Inneren befindet sich jedoch ein abrupter Übergang der thermischen Ausdehnungskoeffizienten, der sich nachteilig auf die Spannungsverteilung im Glaskeramik-Gegenstand auswirken kann.

Darüber hinaus können in einem erfindungsgemäßen glaskeramischen Gegenstand Minoritäts-Kristall-Phasen wie beispielsweise Gahnit-Mischkristalle oder Zirkontitanat-Mischkristalle enthalten sein. Gahnit-Mischkristalle insbesondere im ersten weitestgehend amorphen Gefüge-Bereich und gegebenenfalls auch in allen weiteren Gefüge-Bereichen in geringeren Mengen, kennzeichnen eine besonders bevorzugte Ausführungsform. Die Erfinder gehen davon aus, dass Gahnit-Mischkristall-Gehalte insbesondere im ersten Gefüge-Bereich, die mit einer Gahnit-Dotierung gleichgesetzt werden können, vorteilhaft die Säurebeständigkeit des Glaskeramik umfassenden Gegenstands erhöhen. Die Erfinder nehmen an, dass dieser Gahnit-Mischkristall-Gehalt, insbesondere in Kombination mit einem relativ dicken amorphen Randbereich, für die im Vergleich zum Stand der Technik sehr gute Säurebeständigkeit des Glaskeramik umfassenden Gegenstands verantwortlich ist.

Demgemäß umfasst ein besonders bevorzugter glaskeramischer Gegenstand einen randständigen Bereich des ersten weitestgehend amorphen Gefüges, der an Gahnit-Mischkristallen angereichert ist. Gemäß einer zusätzlichen Weiterbildung der Erfindung liegt im randständigen Bereich des ersten weitestgehend amorphen Gefüges zumindest eine Gahnit-Dotierung vor.

Die Erfindung wird im Folgenden anhand von Beispielen im Detail erläutert. Gleiche oder ähnliche Merkmale sind in den Figuren mit den gleichen Bezugszeichen versehen. Es zeigen
- Fig. 1:: ein Temperatur-Zeit-Diagramm eines erfindungsgemäßen Verfahrens zur Herstellung einer opaken Keatit-Mischkristall-Keramik;
- Fig. 2a:: die verschiedenen Gefügebereiche eines erfindungsgemäßen glaskeramischen im Profilschnitt der Oberseite und den zugehörigen Ionen-Gehaltsverlauf;
- Fig. 2b:: die verschiedenen Gefügebereiche eines erfindungsgemäßen glaskeramischen Gegenstands im Profilschnitt der Unterseite und den zugehörigen Ionen-Gehaltsverlauf;
- Fig. 3:: Dünnschichtröntgenbeugungsmessungen (DS-XRD) aus verschiedenen Tiefenbereichen (Figs. 3a - 3c) eines erfindungsgemäßen glaskeramischen Gegenstands;
- Fig. 4:: relative Längenänderung von glaskeramischen Gegenständen unterschiedlicher Zusammensetzung für den Temperaturbereich zwischen 0 und etwa 950°C.

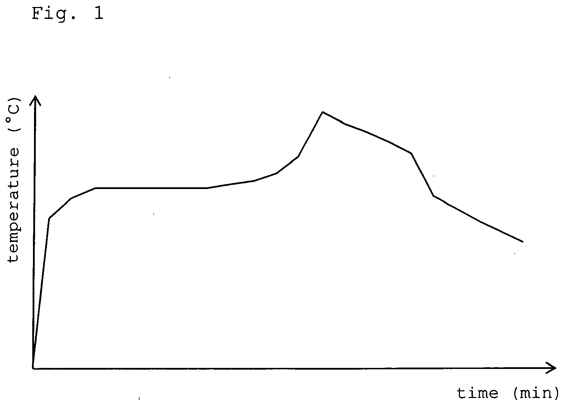

In Fig. 1 ist ein Temperatur-Zeit-Diagramm eines erfindungsgemäßen Verfahrens dargestellt, mit dem ein opaker glaskeramischer Gegenstand aus einem Grünglas-Vorläufergegenstand herstellbar ist. Auf der x-Achse ist die Zeit, auf der y-Achse die Temperatur dargestellt.

Grundsätzlich kann das Verfahren auch mit einem vorkeramisierten Vorläufergegenstand, der zeitlich und optional örtlich getrennt von der Herstellung des glaskeramischen Gegenstands hergestellt wurde, durchgeführt werden.

Ein Grünglas-Vorläufergegenstand mit einer Lithium-Aluminium-Silikat (LAS)-Zusammensetzung wird zunächst in einen Vorläufergegenstand mit einer Hochquarz-Mischkristall-Phase und anschließend in einen glaskeramischen Gegenstand, der zumindest eine Keatit-Mischkristall-Phase umfasst, umgewandelt.

Das Grünglas kann eine Zusammensetzung aus dem Bereich

| | | |
|---|---|---|
| 60 - 73,0 | Gew.-% | Si0₂, |
| 15 - 25,0 | Gew.-% | Al₂O₃, |
| 2,2 - 5,0 | Gew.-% | Li₂O, |
| 0 - 5,0 | Gew.-% | CaO + SrO + BaO, |
| 0 - 5,0 | Gew.-% | TiO₂, |
| 0 - 5,0 | Gew.-% | ZrO₂, |
| 0 - 4,0 | Gew.-% | ZnO |
| 0 - 3,0 | Gew.-% | Sb₂O₃, |
| 0 - 3,0 | Gew.-% | MgO, |
| 0 - 3,0 | Gew.-% | SnO₂. |
| 0 - 9,0 | Gew.-% | P₂O₅, |
| 0 - 1,5 | Gew.-% | As₂O₃, |
| 0 - 1,2 | Gew.-% | Na₂O + K₂O, wobei die jeweiligen Anteile innerhalb der nachfolgend angegebenen Bereiche liegen, |
| 0 - 1,0 | Gew.-% | Na₂O, |
| 0 - 0,5 | Gew.-% | K₂O und |

aufweisen. Optional können 1,0 Gew.-% färbende Oxide enthalten sein.

Zunächst wird der Vorläufergegenstand von Raumtemperatur auf etwa 660°C innerhalb von 11 Minuten mit einer Heizrate von 58 K/min oder sogar mit bis zu 150 K/min aufgeheizt. Die Heizrate kann in diesem ersten Bereich der Aufheizung generell so hoch wie möglich gewählt werden, da hier die Viskosität des Vorläufergegenstands so niedrig ist, dass kaum interne Spannungen entstehen. Aus verfahrensökonomischen Gründen sollte sie jedoch größer als 15 K/min und bevorzugt größer als 30 K/min sein.

Bis etwa 20 Minuten Verfahrenszeit wird die Heizrate dann langsam auf Null abgesenkt, so dass entweder eine Volumenkristallisation der Hochquarz-Mischkristall-Phase bspw. bei konstanten 790°C oder aber eine Homogenisierung der Temperatur des zu keramisierenden Artikels stattfindet. Diese Homogenisierungsphase ist aber nur optional, d.h. sie ist nicht zwingend prozessspezifisch und daher nicht zwingend notwendig. Die Haltezeit während dieses Prozessschritts beträgt etwa 30 Minuten.

Grundsätzlich kann ein Vorläufergegenstand mit einer Hochquarz-Mischkristall-Phase mit jedem Verfahren, das eine solche Mischkristall-Phase erzeugt, hergestellt werden. Der Verfahrensbereich bis zum Abschluss dieser Volumenkristallisation ist nicht kritisch. Die oben beschriebenen Verfahrensschritte sind jedoch bevorzugt, da es sich um ein vergleichsweise schnelles Verfahren handelt. Grundsätzlich kann das Verfahren an dieser Stelle unterbrochen werden und der Hochquarz-Mischkristall umfassende Gegenstand auf Raumtemperatur abgekühlt werden. So wäre eine zeitlich getrennte Umwandlung in die Keatit-Mischkristall-Phase möglich.

Anschließend wird der keramisierende Vorläufergegenstand mit einer Heizrate von etwa 30 K/min auf eine Maximaltemperatur von 1080°C - 1300°C, bevorzugt 1100 - 1150°C und besonders bevorzugt, wie im Ausführungsbeispiel dargestellt, auf 1120°C erhitzt. Die Heizrate in diesem Verfahrenszeitraum ist größer als 10 K/min und besonders bevorzugt zwischen 14 und 36 K/min liegen, wobei die obere Begrenzung der Heizrate durch die technischen Möglichkeiten bedingt ist. Die vergleichsweise hohen Heizraten in diesem Verfahrenszeitraum führen zu einer Verschiebung der Umwandlung der Hochquarz-Mischkristall-Phase in die Keatit-Mischkristall-Phase zu höheren Temperaturen. Gleichzeitig führen sie zu einer extrem schnellen Umwandlung, die in der Regel innerhalb von ein bis sechs, bevorzugt zwischen ein und vier und besonders bevorzugt zwischen ein bis zwei Minuten erfolgt.

Anders ausgedrückt bedeutet dies, dass der Vorläufergegenstand auf eine Maximaltemperatur aufgeheizt wird, wobei zumindest 80% der Volumenänderung, die der Vorläufergegenstand während der Umwandlung der Hochquarz-Mischkristall-Phase in die Keatit-Mischkristall-Phase des Glaskeramik umfassenden Gegenstands erfährt, innerhalb eines ein bis sechs Minuten, bevorzugt innerhalb eines ein bis vier Minuten und besonders bevorzugt innerhalb eines ein bis zwei Minuten umfassenden Zeitfensters abgeschlossen ist und dabei eine Heizrate zur Erreichung der Maximaltemperatur größer 10 K/min, vorzugsweise zwischen 14 und 36 K/min gefahren wird.

Ohne Einhaltung einer Haltezeit bei der Maximaltemperatur wird der Vorläufergegenstand dann auf etwa 400°C, mit einer durchschnittlichen Kühlrate von etwa 350 K/min bis 15 K/min, bevorzugt von 50 K/min bis 20 K/min und anschließend auf Raumtemperatur abgekühlt.

Es wird vermutet, dass die relativ hohen Heizraten und die dadurch bewirkte Verschiebung der Umwandlung zu höheren Temperaturen in Kombination mit dem Weglassen einer Haltezeit bei Maximaltemperatur und die anschließende schnelle Abkühlung die guten Eigenschaften, insbesondere die hohe Stoßfestigkeit, aber auch eine hohe TUF und eine sehr gute chemische Beständigkeit, bedingen. Zumindest kann nachgewiesen werden, dass die Glaskeramiken, die das verfahrensbedingte Gefüge aufweisen, auch die genannten Eigenschaften zeigen.

Um einen möglichst geringen internen Spannungsaufbau zu erreichen, sollte der Vorläufergegenstand zumindest während des exothermen Bereichs der Phasenumwandlung möglichst gleichmäßig durchwärmt werden. Der Temperaturgradient weicht über die Dicke der Platte maximal +/- 1 K von einer mittleren Temperatur im sich umwandelnden Vorläufergegenstand ab.

Bevorzugt wird die gewünschte homogene Durchwärmung des keramisierenden Vorläufer-Gegenstands mittels Sensoren überwacht und die Ofentemperatur in Abhängigkeit von den gemessenen Werten geregelt. Eine effektive Regelung der Ofentemperatur setzt jedoch aufgrund der sehr geringen Umwandlungszeiten von wenigen Minuten voraus, dass die Regelung innerhalb kürzester Zeit erfolgt. Daher weisen die Temperaturfühler oder Sensoren bevorzugt eine Reaktionszeit von weniger als zehn Sekunden, besonders bevorzugt von maximal einer Sekunde auf. Die Regelung der Beheizung erfolgt vorzugsweise innerhalb von 10 Sekunden und besonders bevorzugt innerhalb von einer Sekunde.

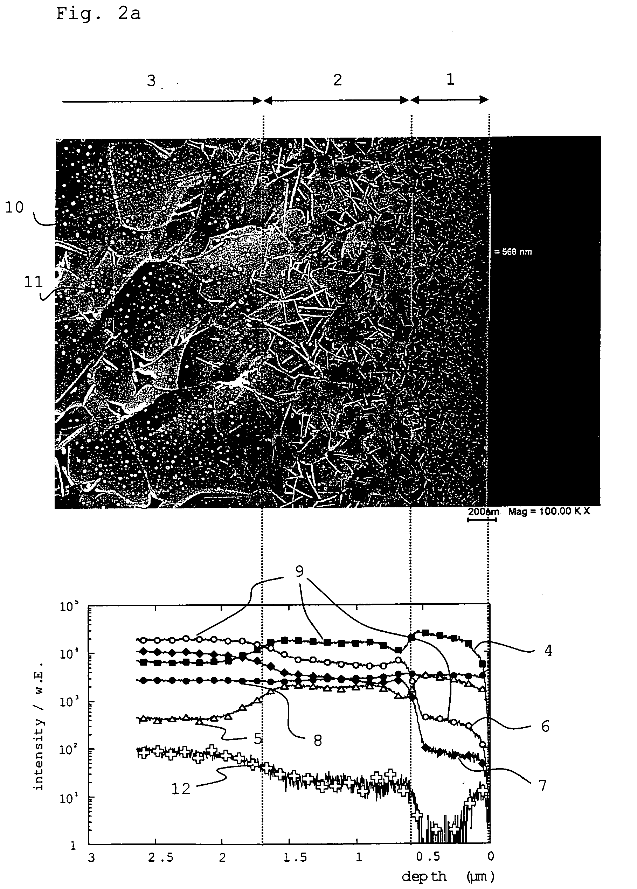

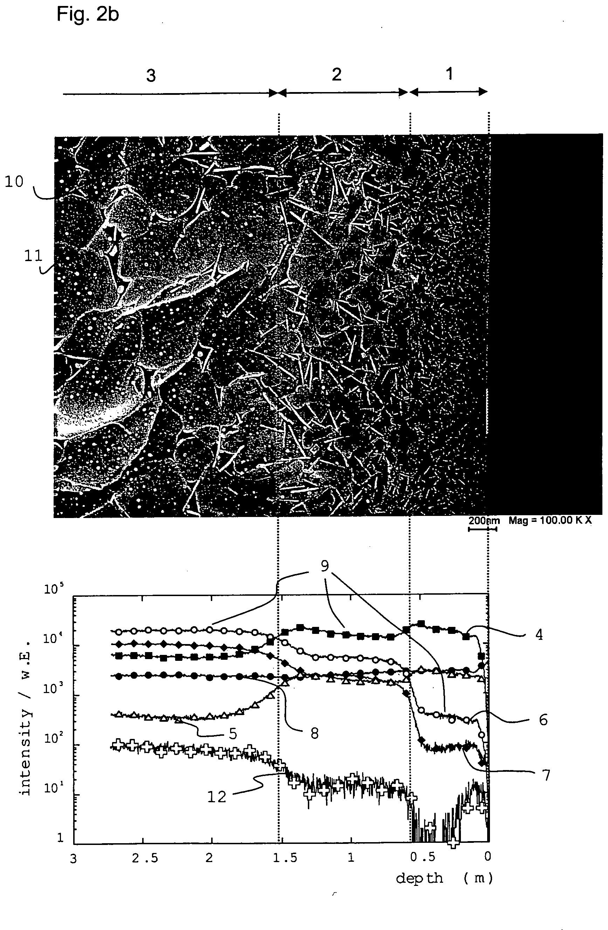

Die Figs. 2a und 2b zeigen eine REM-Aufnahme eines erfindungsgemäßen glaskeramischen Gegenstands sowie die dazugehörigen Ionen-Gehaltsverläufe, die mittels SIMS-Messungen ermittelt wurden. Die SIMS-Messungen sind in einem Koordinaten-System dargestellt, das auf der x-Achse die Tiefe vom Rand des glaskeramischen Gegenstands zur Mitte hin zeigt und auf der y-Achse die Intensität in logarithmischer Darstellung.

Es sind drei unterschiedlichen Gefüge-Bereiche 1, 2, 3 im Profilschnitt sowie die zughörigen Ionen-Gehaltsverläufe der Oberseite (Fig. 2a) und der Unterseite (Fig. 2b) eines glaskeramischen Gegenstands zu erkennen. Der allgemeine Gefügeaufbau wird im Folgenden anhand von Fig. 2a erläutert, während Fig. 2b dazu dient die Ähnlichkeit der Gefüge-Ausbildungen von Ober- und Unterseite eines glaskeramischen Gegenstands zu belegen.

Ein erster weitestgehend amorpher Gefüge-Bereich 1 befindet sich am Rand des glaskeramischen Gegenstands. Dieser Bereich 1 kann bis zu sechs Mikrometer dick sein. In dem in Fig. 2a dargestellten Beispiel weist er eine Dicke von ca. 570 nm auf. Dieser Gefüge-Bereich 1 ist durch eine glasige, also im Wesentlichen amorphe, Matrix gekennzeichnet, die maximal 10 Vol.-% Kristallite umfasst.

Na- 4 und K-Ionen 5 sind in diesem ersten weitestgehend amorphen Bereich 1 relativ zu den beiden anderen Bereichen 2, 3 angereichert, während Li- 6 und Mg-Ionen 7 abgereichert sind. Zn-Ionen 12 sind insbesondere im oberflächlichen Bereich, d.h. in den randständigen 100 bis 200 nm angereichert und nehmen dann bis zum Übergang in den Gefüge-Bereich 2 stark ab.

Die beschriebenen Ionen-Gehaltsverläufe zeigen innerhalb der einzelnen Gefüge 1, 2, 3 Intensitätsplateaus 9. Unter einem Intensitätsplateau 9 wird in diesem Zusammenhang nicht ein im engeren Sinne konstanter Ionen-Gehaltsverlauf verstanden; sondern es soll in erster Linie der Gegensatz zwischen stärker ansteigenden oder abfallenden Gehalten, beispielsweise in den Übergangsbereichen zwischen den einzelnen Gefügen und sich nur langsam oder geringfügig verändernden Gehalten einzelner Ionen innerhalb der Gefüge betont werden.

Im Fall der Ionen-Gehaltsverläufe von Li 6 und Mg 7 im ersten Gefüge-Bereich 1 ist beispielsweise eine leichte Gehaltszunahme zum Inneren des glaskeramischen Gegenstands zu erkennen. Im Vergleich zu den Übergangsbereichen zwischen dem ersten 1 und dem zweiten Gefüge-Bereich 2 oder dem zweiten 2 und dem dritten Gefüge-Bereich 3 ist die Zunahme jedoch sehr moderat und wird deshalb als Intensitätsplateau 9 beschrieben. Ein solcher Gefügeaufbau, der durch Intensitätsplateaus 9 gekennzeichnet ist, ist aus dem Stand der Technik nicht bekannt.

Der sich zum Inneren an den ersten weitestgehend amorphen Gefüge-Bereich 1 hin anschließende Bereich 2 ist durch einen Kristallit-Gehalt von 10 bis 80 Vol.-% charakterisiert, wobei die Kristallit-Größen von Außen nach Innen hin zunehmen. Die Größenzunahme ebenso wie eine Zunahme des Verhältnisses Vol.-% Kristallite zu Vol.-% Restglas-Phase zum Inneren hin, scheint kontinuierlich zu erfolgen.

Der Ionen-Gehaltsverlauf dieses zweiten Gefüge-Bereichs 2 zeigt eine relative Anreicherung von Li- 6, Mg- 7 und Zn-Ionen 12 im Vergleich zum ersten weitestgehend amorphen Gefüge-Bereich 1.

Im Gegensatz zu den Li- 6 und Mg-Ionen 7 sind die Na- 4 und K-Ionen 5 im Vergleich zum ersten weitestgehend amorphen Gefüge-Bereich 1 abgereichert. Der zweite Gefüge-Bereich 2 umfasst in diesem konkreten Fall etwa einen Mikrometer, kann jedoch generell im Bereich von 0,03 bis 5,00 µm liegen.

Der dritte Gefüge-Bereich 3 zeichnet sich durch einen Kristallit-Gehalt von größer als 80 Vol.-% aus. Die Kristallite sind mit 0,05 - 100 µm deutlich größer als in den beiden anderen Gefüge-Bereichen 1, 2. Dieser dritte Gefüge-Bereich 3 bildet das Innere des glaskeramischen Gegenstands.

Die Gehaltsverläufe zeigen für diesen dritten Gefüge-Bereich 3 eine relative Anreicherung von Li- 6, Mg- 7 und Zn-Ionen 12 sowie eine relative Abreicherung von Na- 4 und K-Ionen 5 im Vergleich zu den beiden anderen Gefüge-Bereichen 1, 2 oder Gefügen.

Der Si-Ionen-Gehalt 8 ist abgesehen von einem ganz leichten Trend zu abnehmenden relativen Gehalten im Wesentlichen vom ersten 1 bis zum dritten Gefüge 3 hin konstant, d.h. er zeigt kaum Gefüge-spezifischen Veränderungen.

Als auffälligste sekundäre Kristall-Phasen sind nadel- oder stäbchenförmig Gahnit-Mischkristalle 10 und kubisch oder würfelige Zirkontitanat-Mischkristalle 11 in allen drei Gefüge-Bereichen 1, 2, 3 enthalten. Daneben können Phasen wie Rutil-Mischkristalle als Minoritätsbestandteile verteilt über das gesamte Gefüge auftreten. Die Gahnit-Mischkristalle 10 scheinen die Kristall-Phase im ersten weitestgehend amorphen Gefüge-Bereich 1 zu dominieren. Wie bereits beschrieben, zeigt der Zn-Ionen-Gehaltsverlauf 12 insbesondere im randständigen oder oberflächennahen Bereich des ersten Gefüge-Bereichs 1 eine Anreicherung. Es kann davon ausgegangen werden, dass der Zn-Gehalt der Glaskeramik im Wesentlichen den Zn-Gehalt der Gahnit-Mischkristalle 10 widerspiegelt.

Die Erfinder vermuten, dass die relative Anreicherung von Gahnit-Mischkristallen im randständigen Bereich zumindest teilweise die verbesserte chemische Beständigkeit des erfindungsgemäßen Glaskeramik-Gegenstands erklären kann, da Gahnit eine gute Säurebeständigkeit aufweist. Insbesondere in Kombination mit einem relativ dicken amorphen Randbereich (bis zu 6 µm) ergibt sich hier eine "Versiegelung" mit doppeltem Wirkmechanismus, die das Innere des Glaskeramik-Gegenstands insbesondere vor Säureangriffen schützt.

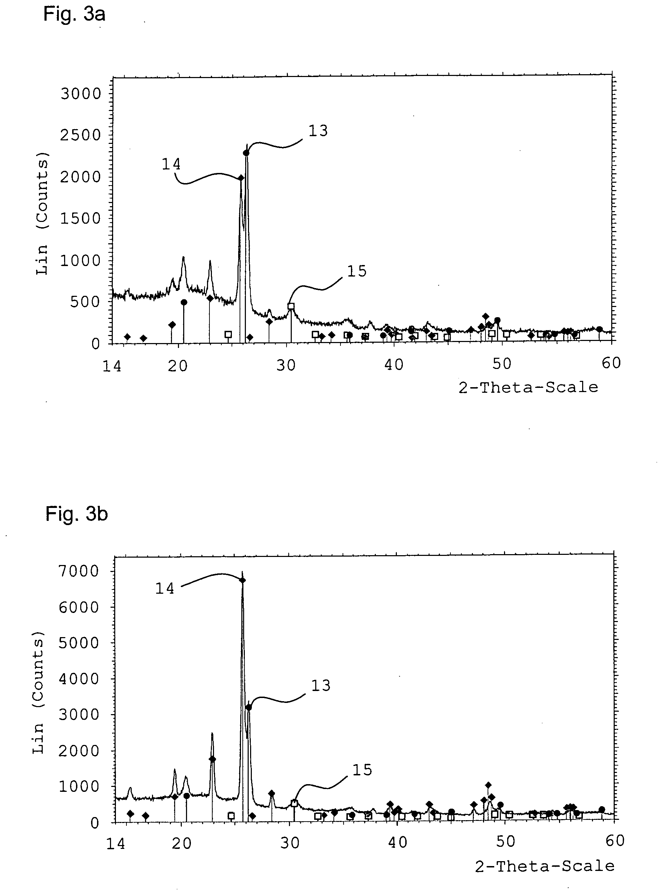

In Fig. 3 sind DS-XRD-Messungen für die Tiefen 0 bis 2,5 µm (Fig. 3a), 0 bis 5 µm (Fig. 3b) und 0 bis 10 µm (Fig. 3c), von der Oberfläche gemessen, dargestellt. Auf der x-Achse dieser Figuren ist der Beugungswinkel, auf der y-Achse die Intensität aufgetragen. Die Figuren 3a - 3c zeigen die Anwesenheit von Si-reichen Hochquarz-Mischkristallen 13 und Keatit-Mischkristallen 14 als Hauptkristall-Phasen sowie von Zirkontitanat-Mischkristalle 15 als Nebenbestandteil an. Das Verhältnis der Intensität des Hochquarz-Mischkristall-Hauptpeaks bei ca. 26,2° zu der des Keatit-Mischkristall-Hauptpeaks bei etwa 25,8° nimmt von innen (Fig. 3c) nach außen (Fig. 3a) zu. Es kann eine kontinuierliche Zunahme des relativen Gehalts von Sireichen Hochquarz-Mischkristallen 13 von innen nach außen postuliert werden. Da weder von dem zweiten 2 noch vom ersten weitestgehend amorphen Gefüge-Bereich 1 DS-XRD-Messungen möglich waren, handelt es sich hierbei lediglich um eine Vermutung.

Sollte diese Vermutung zutreffen, würde sich eine kontinuierliche Abnahme des thermischen Ausdehnungskoeffizienten zumindest innerhalb des dritten 3 und zweiten Gefüge-Bereichs 2, von innen nach außen ergeben. Dies könnte einen gleichmäßigen von innen nach außen zunehmenden internen Spannungsaufbau zumindest in diesen Bereichen 2, 3 bewirken und damit die guten mechanischen Eigenschaften des erfindungsgemäßen glaskeramischen Gegenstands erklären.

Es könnte jedoch auch sein, dass die relativen Gehalte der Si-reichen Hochquarz-Mischkristall-Phase 13 nicht kontinuierlich, sondern unregelmäßig oder sogar in vielen einzelnen Stufen von innen nach außen zunehmen. Für diese Vermutung liegen jedoch keine weiteren Hinweise in den verfügbaren Daten vor.

In der DE 10 2005 019 247 B4 wird ein Verfahren zur Herstellung einer Keatit- oder Hochquarz-Mischkristall und Keatit-Mischkristall enthaltenden Glaskeramik beschrieben. Die mit dem in der Patentschrift beschrieben Verfahren hergestellte Glaskeramik benötigt im Gegensatz zum in der Patentschrift angeführten Stand der Technik keine oberflächennahe Hochquarz-Mischkristall-Schicht, um eine Druckspannung in der Oberfläche zu erzeugen und so eine hohe Temperaturunterschiedsfestigkeit zu gewährleisten.

Erfindungsgemäß garantiert das Verfahren bestimmte chemische Gradienten, durch die ein unterschiedlicher Temperatur-Ausdehnungskoeffizient zwischen der Oberfläche und dem Inneren verursacht wird. Diese unterschiedlichen Temperatur-Ausdehnungskoeffizienten wiederum bedingen eine oberflächennahe Druckspannung, die die erwünschte TUF ermöglicht.

Die Glaskeramik weist einen Oberflächendickenbereich auf, der durch Gradienten von K-, Na-, Zn- und Li-Ionen charakterisiert ist und bis zu 100 µm oder sogar bis zu 160 µm dick sein kann. Im Gegensatz zu dem erfindungsgemäßen glaskeramischen Gegenstand zeigen die dargestellten relativen Ionen-Gehaltsverläufe keine Intensitätsplateaus, sondern nehmen von außen nach innen kontinuierlich ab oder zu.

Darüber hinaus weist ein glaskeramischer Gegenstand mit einer LAS-Zusammensetzung, der mit dem erfindungsgemäßen Verfahren hergestellt wurde, im Gegensatz zu diesem Stand der Technik einen von innen nach außen zunehmenden Gehalt einer Hochquarz-Mischkristall-Phase 13 im Vergleich zu einer Keatit-Mischkristall-Phase 14 auf. Das Innere des Glaskeramik umfassenden Gegenstands wird von einer Keatit-Mischkristall-Phase 14 mit einen thermischen Ausdehnungskoeffizienten von etwa 1 x 10⁻⁶ K⁻¹ dominiert. Mit zunehmendem relativem Hochquarz-Mischkristall-Gehalt 13 nach außen hin nimmt dieser thermische Ausdehnungskoeffizient bis zu einem Wert zwischen 0 und 1 x 10⁻⁶ K⁻¹ ab. Der weitestgehend amorphe erste Gefügebereich 1 weist dagegen einen thermischen Ausdehnungskoeffizienten von etwa 3 x 10⁻⁶ K⁻¹ auf.

Unabhängig davon, ob der Anteil der Hochquarz-Mischkristall-Phase 13 kontinuierlich oder in Stufen zunimmt, wird eine gleichmäßigere oder jedenfalls weniger sprunghaft zunehmende Druckspannung zu den oberflächennahen Bereichen hin aufgebaut. Dies steht im Gegensatz zum Stand der Technik. Die US 4,218,512 offenbart beispielsweise eine Glaskeramik mit einem zweistufigen Gefüge, einem Keatit-Mischkristall-Bereich im Inneren und einem Hochquarz-Mischkristall-Bereich Außen. Der Übergang zwischen diesen beiden Bereichen wird als abrupt beschrieben. Es scheint kein vermittelnder Übergang zwischen den thermischen Ausdehnungskoeffizienten vorzuliegen.

Ein weiterer Vorteil des erfindungsgemäßen Verfahrens gegenüber dem Stand der Technik wie er beispielsweise in der EP 1170264 B1 gelehrt wird, ist, dass der SiO₂-Gehalt der vorhandenen Hochquarz-Mischkristalle nicht kritisch ist. Im vorgenannten Stand der Technik muss das Verfahren genau gesteuert werden, um zu erreichen, dass der SiO₂-Gehalt der Hochquarz-Mischkristalle einen Grenzwert nicht übersteigt, damit beim Abkühlen nicht eine Umwandlung in die tief-Quarz-Struktur erfolgt. Die Hochquarz-Mischkristalle, die in einem erfindungsgemäßen Glaskeramik umfassenden Gegenstand enthalten sein können, sind reliktischer Natur, d.h. die Keramisierung wurde beendet bevor diese Hochquarz-Mischkristalle in Keatit-Mischkristalle umgewandelt werden konnten. Somit ist das beschriebene Verfahren deutlich robuster als das im Stand der Technik gelehrte Verfahren, da Ungenauigkeiten in der Verfahrensführung lediglich eine mehr oder weniger umfängliche Umwandlung in Keatit-Mischkristalle zur Folge haben. Es besteht somit nicht die Gefahr, dass sich Hochquarz-Mischkristalle bilden, die sich beim Abkühlen in die tief-Quarz-Struktur umlagern.

Ein mit dem erfindungsgemäßen Verfahren hergestellter glaskeramischer Gegenstand mit 4 mm Wandstärke hat beispielsweise folgende mechanische und chemische Eigenschaften, wobei x ± s einen Mittelwert x und die zugehörige Standardabweichung s kennzeichnet:

| Stoßfestigkeit h_{B}: | |
|---|---|
| x ± s | 56 ± 13 cm |
| 5%-Fraktil | 33 cm |

| Biegefestigkeit **s**_{bB}: | |
|---|---|
| x ± s | 118 ± 18 MPa |
| TUF | |
| x ± s | > 787°C |
| thermische Ausdehnung: | siehe Fig. 4 |

| Transmission : | |
|---|---|
| 400 nm | 0,0 % |
| 600 nm | 0,0 % |
| 700 nm | 0,2 % |
| 1600 nm | 72,0 % |

| Chemische Beständigkeit: | |
|---|---|
| Wasser (DIN/ISO 719) | HGB 1 |
| Säure (DIN 12 116) | 1 |
| Lauge (ISO 695) | A 1 |

Darüber hinaus gibt ein erfindungsgemäßer glaskeramischer Gegenstand wenig bis gar keine Partikel ab. Eine Abgabe von sonstige Materialbestandteilen wie beispielsweise Alkali- oder Erdalkali-Ionen etc. ist nur unter extremen Bedingungen, höchsten Temperaturen und extrem langen Einsatzzeiten bei schwefelhaltiger Atmosphäre, denkbar. Diese geringe Stoffabgabe ermöglicht den Einsatz dieser Glaskeramik generell in Bereichen, in denen höchste Reinheitsvorschriften bestehen, beispielsweise bei der Herstellung von Solarzellen oder auch in der medizinischen und pharmazeutischen Industrie. Zum Teil kann diese geringe Stoffabgabe mit einer sehr geringen Porendichte auf der weitestgehend amorphen Oberfläche erklärt werden, die das Ausdiffundieren von Ionen beispielsweise unter Hochtemperaturbelastung deutlich vermindert. Gleichzeitig führt eine geringe Porendichte auch zu einer sehr glatten Oberfläche, die nicht nachbearbeitet werden muss.

Figur 4 zeigt die relative Längenänderung von skeramischen Gegenständen in Abhängigkeit von der Temperatur für einen Temperaturbereich zwischen null und etwa 950°C. Es wird deutlich, dass sich ein glaskeramischer Gegenstand maximal um 0,16 % verlängert, wenn er von null auf etwa 950°C erhitzt wird. Für diesen Temperaturbereich liegt der maximale durchschnittliche thermische Ausdehnungskoeffizient bei etwa 1,7 ^{∗} 10⁻⁶/K und der minimale thermische Ausdehnungskoeffizient bei etwa 1,1 ^{∗} 10⁻⁶/K der dargestellten glaskeramischen Gegenstände.

## Patentansprüche

1. Verfahren zur Herstellung eines glaskeramischen Gegenstands, bei dem zumindest ein Vorläufergegenstand zumindest teilweise zu einem glaskeramischen Gegenstand umgewandelt wird, wobei
entweder ein erster Vorläufergegenstand aus Glas zu dem glaskeramischen Gegenstand keramisiert wird oder
zumindest eine erste Kristall-Phase eines zweiten Vorläufergegenstands in eine zweite Kristall-Phase des glaskeramischen Gegenstands weiter keramisiert wird, und wobei
der Vorläufergegenstand auf eine Maximaltemperatur aufgeheizt wird, wobei eine Temperaturverteilung zwischen Oberseite und Unterseite des Vorläufergegenstands zumindest während eines exothermen Bereichs der Phasenumwandlung maximal +/- 1 K von einer mittleren Temperatur im sich umwandelnden Vorläufergegenstand abweicht, wobei eine Heizrate zur Erreichung der Maximaltemperatur gefahren wird, die größer als 10 K/min ist und
die Maximaltemperatur höchstens zwei Minuten gehalten wird oder wobei bevorzugt direkt nach Erreichen der Maximaltemperatur gekühlt wird, ohne dass eine Haltezeit bei dieser Maximaltemperatur eingehalten wird, wobei
der Vorläufergegenstand eine Lithium-AluminiumSilikat-Zusammensetzung aufweist.

2. Verfahren nach Anspruch 1, **dadurch gekennzeichnet, dass** eine Heizrate zur Erreichung der Maximaltemperatur gefahren wird, die zwischen 14 und 36 K/min liegt.

3. Verfahren zur Herstellung eines glaskeramischen Gegenstands, nach einem der Ansprüche 1 oder 2, bei dem zumindest ein Vorläufergegenstand zu einem glaskeramischen Gegenstand keramisiert wird, wobei
entweder ein Vorläufergegenstand aus Glas zu einem glaskeramischen Gegenstand keramisiert wird oder
zumindest eine erste Kristall-Phase eines Vorläufergegenstands in eine zweite Kristall-Phase des glaskeramischen Gegenstands weiter keramisiert wird, wobei
der Vorläufergegenstand auf eine Maximaltemperatur aufgeheizt wird, und wobei
zumindest 80% einer Volumenänderung, die der Vorläufergegenstand während der Keramisierung in die erste oder zweite Kristall-Phase des glaskeramischen Gegenstands erfährt, innerhalb eines ein bis sechs Minuten, bevorzugt innerhalb eines ein bis vier Minuten und besonders bevorzugt innerhalb eines ein bis zwei Minuten umfassenden Zeitfensters abgeschlossen ist und dabei eine Heizrate zur Erreichung der Maximaltemperatur von größer als 10 K/min, vorzugsweise zwischen 14 und 36 K/min gefahren wird.

4. Glaskeramischer Gegenstand, hergestellt oder herstellbar nach einem der Ansprüche 1 bis 3, **dadurch gekennzeichnet, dass** der einstückige, nicht nachbearbeitete oder weiterverarbeitete glaskeramische Gegenstand zumindest drei verschiedenartige Gefüge (1, 2, 3) umfasst, wobei
sich die Gefüge (1, 2, 3) in der Zusammensetzung der Kristallite und/oder der Zusammensetzung der Restglasphasen unterscheiden, und wobei
die unterschiedlichen Gefüge (1, 2, 3) im Querprofil senkrecht zu den Übergangsbereichen durch unterschiedliche relative Ionen-Gehaltsverläufe charakterisiert sind, wobei insbesondere
die relativen Ionen-Gehaltsverläufe anhand von mittels Sekundärionen-Massenspektrometrie ermittelten Intensitäten bestimmt werden, und
die zumindest drei verschiedenartigen Gefüge (1, 2, 3) jeweils unterschiedliche Intensitätsplateaus (9) für einzelne Ionen aufweisen, bei welchen die einzelnen Ionen Bestandteile der Hauptkristall-Phasen sind, wobei
die Glaskeramik eine Lithium-Aluminium-Silikat-Zusammensetzung aufweist und die Ionen, die Intensitätsplateaus zeigen, Na-, K-, Li- oder Mg-Kationen umfassen.

5. Glaskeramischer Gegenstand nach Anspruch 4, **dadurch gekennzeichnet, dass** Übergänge zwischen Bereichen unterschiedlicher Gefüge (1, 2, 3) die Morphologie der Grenzflächen zur Umgebung des glaskeramischen Gegenstands, d.h. die Konturen des Glaskeramik umfassenden Gegenstands, nachbilden und die Bereiche unterschiedlicher Gefüge (1, 2, 3) vom Rand zum Inneren des glaskeramischen Gegenstands aufeinander folgen.

6. Glaskeramischer Gegenstand nach einem der vorstehenden Ansprüche 4 oder 5, **dadurch gekennzeichnet, dass** ein äußerer, die Grenzfläche zur Umgebung umfassender Bereich des glaskeramischen Gegenstands ein weitestgehend amorphes erstes Gefüge (1) aufweist, wobei der Kristallit-Gehalt dieses Bereichs maximal 10 Vol.-% beträgt.

7. Glaskeramischer Gegenstand nach einem der vorstehenden Ansprüche 4 bis 6, **dadurch gekennzeichnet, dass** ein zweites, an das erste angrenzendes Gefüge (2) einen Kristallit-Gehalt zwischen 10 und 80 Vol.-% aufweist.

8. Glaskeramischer Gegenstand nach einem der vorstehenden Ansprüche 4 bis 7, **dadurch gekennzeichnet, dass** ein drittes, an das zweite angrenzendes Gefüge (3) einen Kristallit-Gehalt von über 80 Vol.-% aufweist.

9. Glaskeramischer Gegenstand nach einem der vorstehenden Ansprüche 4 bis 8, **dadurch gekennzeichnet, dass** der glaskeramische Gegenstand eine Stoßfestigkeit von größer 15 cm, vorzugsweise größer 20 cm Bruchfallhöhe im Kugelfalltest aufweist, wobei die angegebenen Werte dem 5%-Fraktil der Weibull-Verteilung entsprechen und sich auf eine Probengröße von 200 x 200 x 4 mm beziehen, auf die eine 535 g schwere Stahlkugel fällt.

10. Glaskeramischer Gegenstand nach einem der vorstehenden Ansprüche 4 bis 9, **dadurch gekennzeichnet, dass** der glaskeramische Gegenstand eine Säurebeständigkeit gemäß DIN 12 116 von Klasse 1 oder 2 aufweist.

11. Glaskeramischer Gegenstand nach einem der vorstehenden Ansprüche 4 bis 10, **dadurch gekennzeichnet, dass** der glaskeramische Gegenstand nach einem 30-minütigen Angriff von konzentrierter Schwefelsäure bei einer Temperatur von 370°C und einem anschließend ausgeführten Kugelfalltest eine Bruchfallhöhe von mehr als 15 cm und bevorzugt mehr als 20 cm aufweist.

12. Glaskeramischer Gegenstand nach einem der vorstehenden Ansprüche 4 bis 11, **dadurch gekennzeichnet, dass** der glaskeramische Gegenstand eine Zusammensetzung aus dem Bereich
| | | |
|---|---|---|
| 60 - 73,0 | Gew.-% | Si0₂, |
| 15 - 25,0 | Gew.-% | Al₂O₃, |
| 2,2 - 5,0 | Gew.-% | Li₂O, |
| 0 - 5,0 | Gew.-% | CaO + SrO + BaO, |
| 0 - 5,0 | Gew.-% | TiO₂, |
| 0 - 5,0 | Gew.-% | ZrO₂, |
| 0 - 4,0 | Gew.-% | ZnO |
| 0 - 3,0 | Gew.-% | Sb₂O₃, |
| 0 - 3,0 | Gew.-% | MgO, |
| 0 - 3,0 | Gew.-% | SnO₂. |
| 0 - 2,0 | Gew.-% | P₂O₅, |
| 0 - 1,5 | Gew.-% | As₂O₃, |
| 0 - 1,2 | Gew.-% | Na₂O + K₂O, wobei die jeweiligen Anteile innerhalb der nachfolgend angegebenen Bereiche liegen, |
| 0 - 1,0 | Gew.-% | Na₂O, |
| 0 - 0,5 | Gew.-% | K₂O und |
| 0 - 1,0 | Gew.-% | färbende Oxide |
aufweist.

13. Glaskeramischer Gegenstand nach dem vorstehenden Anspruch, **dadurch gekennzeichnet, dass** das erste glasige Gefüge (1) relativ zum zweiten und dritten Gefüge (2, 3) an Li- (6) und Mg-Ionen (7) verarmt und an Na- (4) und K-Ionen (5) angereichert ist.

14. Glaskeramischer Gegenstand nach einem der Ansprüche 12 oder 13, **dadurch gekennzeichnet, dass** im zweiten Gefüge (2) Li- (6) und Mg-Ionen (7) relativ zum ersten Gefüge (1) angereichert sind, während Na- (4) und K-Ionen (5) relativ zum ersten Gefüge (1) abgereichert sind.

15. Glaskeramischer Gegenstand nach einem der Ansprüche 12 bis 14, **dadurch gekennzeichnet, dass** im dritten Gefüge (3) Li- (6) und Mg-Ionen (7) relativ zu den beiden anderen Gefügen (1, 2) angereichert sind und Na- (4) und K-Ionen (5) relativ zu den beiden anderen Gefügen (1, 2) abgereichert sind.

16. Glaskeramischer Gegenstand nach einem der Ansprüche 12 bis 15, **dadurch gekennzeichnet, dass** ein randständiger Bereich des ersten weitestgehend amorphen Gefüge-Bereichs an Gahnit-Mischkristallen angereichert und/oder ein nicht randständiger Bereich des ersten weitestgehend amorphen Gefüge-Bereichs an Gahnit-Mischkristallen abgereichert ist.

17. Glaskeramischer Gegenstand nach einem der Ansprüche 12 bis 16, **dadurch gekennzeichnet, dass** das erste (1) und das zweite Gefüge (2), charakterisiert durch die Ionengehalts-Verläufe, eine Dicke von maximal 10 µm und bevorzugt von maximal 5 µm aufweisen.

18. Glaskeramischer Gegenstand nach einem der Ansprüche 12 bis 17, **dadurch gekennzeichnet, dass** zumindest das dritte Gefüge (3) des glaskeramischen Gegenstands eine Hauptkristall-Phase aus Keatit-Mischkristallen (14) und eine zweite Kristall-Phase aus Hochquarz-Mischkristallen (13) aufweist, wobei das Verhältnis zwischen der Hochquarz-Mischkristall-Phase (13) und der Keatit-Mischkristall-Phase (14) zum Rand des glaskeramischen Gegenstands kontinuierlich oder in Stufen zunimmt.

19. Verwendung eines glaskeramischen Gegenstands nach einem der Ansprüche 4 bis 18 als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch- oder Bratfläche, als Weißware, als Heizkörperabdeckung, als Wafersubstrat, als transluzenter Gegenstand mit UV-Schutz oder als Fassadenplatte.

## Claims

1. A method for producing a glass ceramic article, wherein at least one precursor article is at least partially transformed into a glass ceramic article, wherein
either a first precursor article made of glass is ceramized into the glass ceramic article; or
at least a first crystalline phase of a second precursor article is further ceramized into a second crystalline phase of the glass ceramic article; and wherein
the precursor article is heated up to a maximum temperature, wherein a temperature distribution between upper surface and lower surface of the precursor article deviates by not more than ± 1 K from an average temperature in the transforming precursor article, at least during an exothermic period of the phase transition; wherein a heating rate for reaching the maximum temperature is controlled to be greater than 10 K/min; and
the maximum temperature is maintained for not more than two minutes or, preferably, cooling is performed immediately after reaching the maximum temperature without maintaining a holding time at this maximum temperature; wherein
the precursor article comprises a lithium aluminium silicate composition.

2. The method according to claim 1, **characterised in that** a heating rate controlled to achieve the maximum temperature is between 14 and 36 K/min.

3. A method for producing a glass ceramic article according to any one of claims 1 or 2, wherein at least one precursor article is ceramized into a glass ceramic article; wherein
either a precursor article made of glass is ceramized into the glass ceramic article; or
at least a first crystalline phase of a precursor article is further ceramized into a second crystalline phase of the glass ceramic article; wherein
the precursor article is heated up to a maximum temperature, and wherein
at least 80 % of a volume change experienced by said precursor article during ceramization into the first or second crystalline phase of the glass ceramic article is completed within a time window of one to six minutes, preferably within one to four minutes, and most preferably within one to two minutes, while a heating rate for achieving the maximum temperature is controlled to be greater than 10 K/min, preferably between 14 and 36 K/min.

4. A glass ceramic article, produced or producible according to any one of claims 1 to 3, **characterised in that** the integral, non-post-processed and non-reworked glass ceramic article comprises at least three different microstructures (1, 2, 3); wherein
said microstructures (1, 2, 3) differ in the composition of the crystallites and/or in the composition of the residual glass phases; and wherein
the different microstructures (1, 2, 3) are **characterized by** different relative ion content profiles across a cross section perpendicular to the transition areas; wherein in particular
the relative ion content profiles are determined from intensities determined by secondary ion mass spectrometry; and
the at least three different microstructures (1, 2, 3) each have different intensity plateaus (9) for individual ions, at which the individual ions are components of the main crystal phases; wherein
the glass ceramic comprises a lithium aluminium silicate composition, and wherein the ions exhibiting intensity plateaus include Na, K, Li, or Mg cations.

5. The glass ceramic article according to claim 4, **characterised in that** transitions between zones of different microstructure (1, 2, 3) reproduce the morphology of the interfaces to the environment of the glass ceramic article, i.e. the contours of the glass ceramic article, and wherein the zones of different microstructure (1, 2, 3) are arranged successively from the periphery to the interior of the glass ceramic article.

6. The glass ceramic article according to any one of the preceding claims 4 or 5, **characterised in that** an outer zone of the glass ceramic article which comprises the interface of the glass ceramic article to the environment has a predominantly amorphous first microstructure (1), wherein a crystallite content of this zone is not more than 10 vol.%.

7. The glass ceramic article according to any one of the preceding claims 4 to 6, **characterised in that** a second microstructure (2) adjoining the first microstructure has a crystallite content from 10 to 80 vol.%.

8. The glass ceramic article according to any one of the preceding claims 4 to 7, **characterised in that** a third microstructure (3) adjoining the second microstructure has a crystallite content of more than 80 vol.%.

9. The glass ceramic article according to any one of the preceding claims 4 to 8, **characterised in that** the glass ceramic article exhibits an impact resistance of more than 15 cm, preferably more than 20 cm fracture height in the ball drop test, wherein the given values correspond to the 5% fractile of the Weibull distribution and relate to a sample size of 200 x 200 x 4 mm onto which a 535 g steel ball falls.

10. The glass ceramic article according to any one of the preceding claims 4 to 9, **characterised in that** the glass ceramic article exhibits a resistance to acids of class 1 or class 2 according to DIN 12 116.

11. The glass ceramic article according to any one of the preceding claims 4 to 10, **characterised in that** after a 30 minute attack of concentrated sulfuric acid at a temperature of 370 °C, the glass ceramic article exhibits a fracture height in a subsequently performed ball drop test of more than 15 cm and preferably more than 20 cm.

12. The glass ceramic article according to any one of the preceding claims 4 to 11, **characterised in that** the glass ceramic comprising article has a composition selected from the range of:
| | | |
|---|---|---|
| 60 - 73.0 | wt.% | SiO₂, |
| 15 - 25.0 | wt.% | Al₂O₃, |
| 2.2 - 5.0 | wt.% | Li₂O, |
| 0 - 5.0 | wt.% | CaO + SrO + BaO, |
| 0 - 5.0 | wt.% | TiO₂, |
| 0 - 5.0 | wt.% | ZrO₂, |
| 0 - 4.0 | wt.% | ZnO, |
| 0 - 3.0 | wt.% | Sb₂O₃, |
| 0 - 3.0 | wt.% | MgO, |
| 0 - 3.0 | wt.% | SnO₂, |
| 0 - 2.0 | wt.% | P₂O₅, |
| 0 - 1.5 | wt.% | As₂O₃. |
| 0 - 1.2 | wt.% | Na₂O + K₂O, wherein |
| | | the respective contents are within the specified ranges |
| 0 - 1.0 | wt.% | Na₂O, |
| 0 - 0.5 | wt.% | K₂O, and |
| 0 - 1.0 | wt.% | colouring oxides. |

13. The glass ceramic article according to the preceding claim, **characterised in that** the first glassy microstructure (1) is depleted in Li (6) and Mg (7) ions and is enriched in Na (4) and K (5) ions, compared to the second and third microstructures (2, 3).

14. The glass ceramic article according to any one of the preceding claims 12 or 13, **characterised in that** the second microstructure (2) is enriched in Li (6) and Mg (7) ions compared to the first microstructure (1), while being depleted in Na (4) and K (5) ions compared to the first microstructure (1).

15. The glass ceramic article according to any one of the preceding claims 12 to 14, **characterised in that** the third microstructure (3) is enriched in Li (6) and Mg (7) ions compared to the two other microstructures (1, 2) and is depleted in Na (4) and K (5) ions compared to the two other microstructures (1, 2).

16. The glass ceramic article according to any one of the preceding claims 12 to 15, **characterised in that** a peripheral area of the first, predominantly amorphous microstructure zone is enriched in gahnite solid solution, and/or a non-peripheral area of the first, predominantly amorphous microstructure zone is depleted in gahnite solid solution.

17. The glass ceramic article according to any one of the preceding claims 12 to 16, **characterised in that** the first (1) and second (2) microstructures as defined by their ion content profiles have a thickness of not more than 10 µm and preferably not more than 5 µm.

18. The glass ceramic article according to any one of the preceding claims 12 to 17, **characterised in that** at least the third microstructure (3) of the glass ceramic article includes a main crystalline phase of keatite solid solution (14) and a second crystalline phase of high-quartz solid solution (13), wherein the ratio between the high-quartz solid solution phase (13) and the keatite solid solution phase (14) increases continuously or incrementally towards the periphery of the glass ceramic article.

19. Use of a glass ceramic article according to any one of claims 4 to 18 as a support plate or oven liner in the ceramic, solar or pharmaceutical industry, or in medical technology, in particular for production processes under highly clean conditions, as a liner of furnaces in which chemical or physical coating processes are performed, or as chemically resistant laboratory equipment, as a glass ceramic article for high-temperature applications or extreme low temperature applications, as an oven pane for incinerators, as a heat shield for shielding hot environments, as a cover for reflectors, flood lights, video projectors, data projectors, photocopiers, for applications involving thermo-mechanical loads, for example in night vision devices, or as a cover for heating elements, especially as a cooking or frying surface, in white goods, as a heater cover, as a wafer substrate, as a translucent article with UV protection, or as a facade panel.

## Revendications

1. Procédé de fabrication d'une pièce en vitrocéramique, dans lequel on transforme au moins une pièce précurseur, au moins en partie, en une pièce en vitrocéramique, étant entendu que
- soit une première pièce précurseur en verre est céramisée en la pièce en vitrocéramique,
- soit une première phase cristalline d'une deuxième pièce précurseur est céramisée à un degré plus poussé en une deuxième phase cristalline de la pièce en vitrocéramique,
dans lequel procédé
- on chauffe la pièce précurseur à une température maximale, au cours de quoi la courbe de répartition de la température entre la face supérieure et la face inférieure de la pièce précurseur, au moins pendant un stade exothermique de la transition de phase, s'écarte au maximum de ± 1 K de la température moyenne régnant au sein de la pièce précurseur en cours de transformation, étant entendu que pour atteindre la température maximale, on opère à une vitesse de chauffage supérieure à 10 K/min,
- et l'on maintient la température maximale pendant au plus deux minutes, ou bien, de préférence, on refroidit la pièce précurseur dès que la température maximale est atteinte, sans respecter de temps de maintien à cette température maximale,
et étant entendu que la pièce précurseur présente une composition de type silicate de lithium-aluminium.

2. Procédé conforme à la revendication 1, **caractérisé en ce que**, pour atteindre la température maximale, on opère à une vitesse de chauffage de 14 à 36 K/min.

3. Procédé de fabrication d'une pièce en vitrocéramique, conforme à la revendication 1 ou 2, dans lequel on transforme au moins une pièce précurseur, au moins en partie, en une pièce en vitrocéramique, étant entendu que
- soit une pièce précurseur en verre est céramisée en une pièce en vitrocéramique,
- soit une première phase cristalline d'une pièce précurseur est céramisée à un degré plus poussé en une deuxième phase cristalline de la pièce en vitrocéramique,
et dans lequel procédé
- on chauffe la pièce précurseur à une température maximale,
- et au moins 80 % de la variation de volume que subit la pièce précurseur au cours de la céramisation en la première ou la deuxième phase cristalline de la pièce en vitrocéramique se produit en un laps de temps de 1 à 6 minutes, de préférence de 1 à 4 minutes et mieux encore de 1 à 2 minutes, étant entendu que pour atteindre la température maximale, on opère à une vitesse de chauffage supérieure à 10 K/min, et de préférence de 14 à 36 K/min.

4. Pièce en vitrocéramique, fabriquée ou fabricable conformément à l'une des revendications 1 à 3, **caractérisée en ce que** la pièce en vitrocéramique, d'un seul tenant, sans post-traitement ou avec transformation ultérieure, comprend au moins trois structures (1, 2, 3) de types différents,
- lesquelles structures (1, 2, 3) se distinguent par la composition des cristallites et/ou par la composition de la phase vitreuse résiduelle,
- et lesquelles structures (1, 2, 3) différentes sont **caractérisées par** des profils différents de teneurs relatives en ions, dans la direction transversale perpendiculaire aux domaines de transition,
étant entendu que, en particulier,
- les profils de teneurs relatives en ions sont déterminés d'après les intensités mesurées par spectrométrie de masse d'ions secondaires,
- et les structures (1, 2, 3) de types différents, au nombre d'au moins trois, présentent, pour des ions particuliers, des paliers d'intensité (9) respectifs différents, lesquels ions particuliers sont des constituants des phases cristallines principales,
étant entendu que la vitrocéramique présente une composition de type silicate de lithium-aluminium et que les ions qui donnent des paliers d'intensité comprennent les cations de sodium, potassium, lithium ou magnésium.

5. Pièce en vitrocéramique conforme à la revendication 4, **caractérisée en ce que** les transitions entre les domaines des structures différentes (1, 2, 3) suivent la forme des surfaces frontières autour de la pièce en vitrocéramique, c'est-à-dire les contours de la pièce comprenant une vitrocéramique, et **en ce que** les domaines des structures différentes (1, 2, 3) se succèdent l'un derrière l'autre, du bord vers l'intérieur de la pièce en vitrocéramique.

6. Pièce en vitrocéramique conforme à l'une des revendications précédentes 4 et 5, **caractérisée en ce qu'**un domaine externe, englobant la surface frontière vis-à-vis de l'environnement de la pièce en vitrocéramique, présente une première structure (1), la plus amorphe, la teneur en cristallites de ce domaine valant au maximum 10 % en volume.

7. Pièce en vitrocéramique conforme à l'une des revendications précédentes 4 à 6, **caractérisée en ce qu'**une deuxième structure (2), adjacente à la première, présente une teneur en cristallites valant entre 10 et 80 % en volume.

8. Pièce en vitrocéramique conforme à l'une des revendications précédentes 4 à 7, **caractérisée en ce qu'**une troisième structure (3), adjacente à la deuxième, présente une teneur en cristallites de plus de 80 % en volume.

9. Pièce en vitrocéramique conforme à l'une des revendications précédentes 4 à 8, **caractérisée en ce que** la pièce en vitrocéramique présente une résistance au choc de plus de 15 cm et de préférence de plus de 20 cm de hauteur de chute provoquant la rupture dans le test de chute de bille, étant entendu que les valeurs indiquées correspondent au fractile à 5 % de la distribution de Weibull et se rapportent à un échantillon de dimensions 200 x 200 x 4 mm sur lequel tombe une bille d'acier pesant 535 g.

10. Pièce en vitrocéramique conforme à l'une des revendications précédentes 4 à 9, **caractérisée en ce que** la pièce en vitrocéramique présente une stabilité vis-à-vis des acides, évaluée selon la norme DIN 12 116, de classe 1 ou 2.

11. Pièce en vitrocéramique conforme à l'une des revendications précédentes 4 à 10, **caractérisée en ce que** la pièce en vitrocéramique, après 30 minutes d'attaque par de l'acide sulfurique concentré à la température de 370 °C, présente, dans un test de chute de bille réalisé ensuite, une hauteur de chute à la rupture de plus de 15 cm et de préférence de plus de 20 cm.

12. Pièce en vitrocéramique conforme à l'une des revendications précédentes 4 à 11, **caractérisée en ce que** la pièce en vitrocéramique présente une composition située dans le domaine suivant :
60 à 73,0 % en poids de SiO₂,
15 à 25,0 % en poids de Al₂O₃,
2,2 à 5,0 % en poids de Li₂O,
0 à 5,0 % en poids de CaO + SrO + BaO,
0 à 5,0 % en poids de TiO₂,
0 à 5,0 % en poids de ZrO₂,
0 à 4,0 % en poids de ZnO,
0 à 3,0 % en poids de Sb₂O₃,
0 à 3,0 % en poids de MgO,
0 à 3,0 % en poids de SnO₂,
0 à 2,0 % en poids de P₂O₅,
0 à 1,5 % en poids de As₂O₃,
0 à 1,2 % en poids de Na₂O + K₂O, dont les proportions respectives se situent dans les intervalles indiqués ci-dessous,
0 à 1,0 % en poids de Na₂O,
0 à 0,5 % en poids de K₂O,
et 0 à 1,0 % en poids d'oxydes colorants.

13. Pièce en vitrocéramique conforme à la revendication précédente, **caractérisée en ce que** la première structure vitreuse (1), par rapport aux deuxième et troisième structures (2, 3) est plus pauvre en ions de lithium (6) et de magnésium (7) et plus riche en ions de sodium (4) et de potassium (5).

14. Pièce en vitrocéramique conforme à l'une des revendications 12 et 13, **caractérisée en ce que** la deuxième structure (2) est plus riche, par rapport à la première structure (1), en ions de lithium (6) et de magnésium (7), mais moins riche, par rapport à la première structure (1), en ions de sodium (4) et de potassium (5).

15. Pièce en vitrocéramique conforme à l'une des revendications 12 à 14, **caractérisée en ce que** la troisième structure (3) est plus riche, par rapport aux deux autres structures (1, 2), en ions de lithium (6) et de magnésium (7), mais moins riche, par rapport aux deux autres structures (1, 2), en ions de sodium (4) et de potassium (5).

16. Pièce en vitrocéramique conforme à l'une des revendications 12 à 15, **caractérisée en ce qu'**un domaine situé en bordure du domaine de la première structure, la plus amorphe, est relativement plus riche en cristaux mixtes de gahnite et/ou un domaine non situé en bordure du domaine de la première structure, la plus amorphe, est relativement moins riche en cristaux mixtes de gahnite.

17. Pièce en vitrocéramique conforme à l'une des revendications 12 à 16, **caractérisée en ce que** la première structure (1) et la deuxième structure (2), **caractérisées par** les profils de teneurs en ions, présentent une épaisseur d'au plus 10 µm, et de préférence, d'au plus 5 µm.

18. Pièce en vitrocéramique conforme à l'une des revendications 12 à 17, **caractérisée en ce qu'**au moins la troisième structure (3) de la pièce en vitrocéramique présente une phase cristalline principale constituée de cristaux mixtes de kéatite (14) et une deuxième phase cristalline constituée de cristaux mixtes de quartz haute température (13), et le rapport entre la phase de cristaux mixtes de quartz haute température (13) et la phase de cristaux mixtes de kéatite (14) augmente en direction du bord de la pièce en vitrocéramique, de façon continue ou par paliers.

19. Utilisation d'une pièce en vitrocéramique, conforme à l'une des revendications 4 à 18, en tant que plaque de support ou revêtement de four dans l'industrie de ta céramique ou de l'énergie solaire, dans l'industrie pharmaceutique ou dans la technique médicale, en particulier dans les procédés de production mis en œuvre dans des conditions de haute pureté, en tant que revêtement de fours dans lesquels sont mis en œuvre des procédés chimiques ou physiques de dépôt en couche, ou en tant qu'équipement de laboratoire résistant aux agents chimiques, en tant qu'objet en vitrocéramique pour applications à haute température ou à très basse température, en tant que fenêtre de four pour des fours à combustion, en tant que bouclier thermique pour isolement de lieux très chauds, en tant que couvercle pour réflecteurs, projecteurs, projecteurs vidéo, photocopieurs, pour applications avec sollicitations thermomécaniques, par exemple dans des appareils de vision nocturne, ou en tant que revêtements pour éléments chauffants, en particulier en tant que surface de cuisson ou de rôtissage, en tant que pièce d'appareil électroménager pour la cuisine, en tant que revêtement d'élément chauffant, en tant que substrat de galette « wafer », en tant que pièce translucide à protection anti-UV, ou en tant que plaque de façade.
